(19) Europäisches Patentamt / European Patent Office / Office européen des brevets

(11) **EP 3 980 982 B1**

(12) **EUROPEAN PATENT SPECIFICATION**

(45) Date of publication and mention
of the grant of the patent:
**03.09.2025 Bulletin 2025/36**

(21) Application number: **20819195.7**

(22) Date of filing: **07.06.2020**

(51) International Patent Classification (IPC):
*G08G 1/16* *(2006.01)* *G01S 11/06* *(2006.01)*
*G01S 5/00* *(2006.01)* *G06N 20/20* *(2019.01)*
*H04W 4/80* *(2018.01)*

(52) Cooperative Patent Classification (CPC):
**G08G 1/005; G01S 5/0284; G01S 11/04;
G01S 11/06; G06F 18/241; G06V 20/58;
G08G 1/166; H04W 4/40; H04W 4/80;** G01S 5/12;
G06N 3/08; G06N 5/01; G06N 7/01; G06N 20/10;
G06N 20/20

(86) International application number:
**PCT/IL2020/050634**

(87) International publication number:
**WO 2020/245834 (10.12.2020 Gazette 2020/50)**

(54) **WIRELESS COMMUNICATION-BASED CLASSIFICATION OF OBJECTS**

AUF DRAHTLOSER KOMMUNIKATION BASIERENDE KLASSIFIZIERUNG VON OBJEKTEN

CLASSIFICATION D'OBJETS BASÉE SUR UNE COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.06.2019 US 201962858364 P**

(43) Date of publication of application:
**13.04.2022 Bulletin 2022/15**

(73) Proprietor: **A.D Knight Ltd.
4658132 Herzliya (IL)**

(72) Inventors:
• **ABIR, Jonathan Haim
7608625 Rehovot (IL)**

• **ATHIAS, Shlomi
7544993 Rishon-LeZion (IL)**

(74) Representative: **Michalski Hüttermann & Partner
Patentanwälte mbB
Kaistraße 16A
40221 Düsseldorf (DE)**

(56) References cited:
WO-A1-2018/182915    GB-A- 2 562 706
US-A1- 2013 176 144    US-A1- 2017 124 878
US-A1- 2018 165 965    US-A1- 2018 173 971
US-B2- 9 421 909

**Description**

**CROSS REFERENCE TO RELATED APPLICATIONS**

This application claims priority from U.S. Patent Application No. 62/858,364, filed on June 7, 2019, entitled "METHODS AND SYSTEMS FOR DETECTING HAZARDS THAT ARE VISUALLY OBSCURED BY USING PERSONAL COMMUNICATION DEVICE DETECTION SYSTEM".

**BACKGROUND**

The invention relates to the field of machine learning.

In recent years, various types of advanced driver assistance systems (ADAS) have been developed and applied to vehicles.

ADAS require sensors such as radio frequency (RF) detectors, ranging (RADAR), cameras, light detection and ranging (LiDAR) sensor, and ultrasonic sensors. These systems perform decision tasks, such as path planning and obstacle avoidance, as well as actuation tasks, such as acceleration, deceleration, braking, and steering. Therefore, inspection, calibration, validation, verification and failure and errors detection are essential to assure safety and performance of ADAS systems.

These sensors typically depend on a clear line of sight to the object to be detected, hence obstructions caused by topography, infrastructure (buildings, junctions, etc.), vehicles, and the like, limit their detection capability.

GB 2562706 discloses a location device that wirelessly transmits the real time location of a vulnerable road user e.g. cyclist, workman, horses, pedestrians; or an emergency vehicle, having GNSS device and two transmitters. The GPS position is transmitted via the internet (mobile broadband) and Bluetooth, and informs drivers of vehicles within the vicinity of vulnerable road users. The location data is received by the drivers' satellite navigation device or App, and displayed as an icon on a map. An audible warning may be provided if the vulnerable road user or response vehicle is close to the vehicle. A sat nav device may also record the location of a vulnerable user and share the data on the internet, and/or rebroadcast the data e.g. via Wi-Fi to other road users in the vicinity, allow location data to be disseminated when there is no mobile broadband. The location device may be attached to a bicycle, and may have a mobile broadband connection (3G) or be connected to a user's smartphone that transmits the location of the vulnerable road user. When the location details are transmitted via Bluetooth, the published device name is encoded with the real time location details of the device. The foregoing examples of the related art and limitations related therewith are intended to be illustrative and not exclusive. Other limitations of the related art will become apparent to those of skill in the art upon a reading of the specification and a study of the figures.

**SUMMARY**

The invention is defined in the independent claims. Further detailed embodiments are presented in the dependent claims.

**DESCRIPTION OF THE FIGURES**

Exemplary embodiments are illustrated in referenced figures. Dimensions of components and features shown in the figures are generally chosen for convenience and clarity of presentation and are not necessarily shown to scale. The figures are listed below.

Fig. 1 is a high level schematic block diagram of an exemplary system for detecting and classifying targets within a physical environment, in accordance with certain embodiments of the present disclosure;

Fig. 2 is a block diagram of the functional steps in a process for detecting and classifying targets within a physical environment, in accordance with certain embodiments of the present disclosure;

Fig. 3A schematically illustrates an exemplary architecture of an RF detection array, in accordance with certain embodiments of the present disclosure;

Fig. 3B schematically illustrates an RF array and signal processing module, in accordance with certain embodiments of the present disclosure;

Fig. 4A is a flowchart of the steps in a method for distance estimation of a non-cooperative Bluetooth device, in accordance with certain embodiments of the present disclosure;

Fig. 4B is a flowchart of the steps in a method for identifying a Wi-Fi device based on identification of a Bluetooth transmitter in the device, in accordance with certain embodiments of the present disclosure;

Fig. 5 illustrates target classification based on locational parameters, in accordance with certain embodiments of the present disclosure;

Fig. 6 is a flowchart of the steps in a method for target classification suing supplemental modalities, in accordance with certain embodiments of the present disclosure;

Fig. 7A-7C illustrate various roadway scenarios, in accordance with certain embodiments of the present disclosure;

Figs. 8 and 9 show various machine learning model structures, in accordance with certain embodiments of the present disclosure; and

Figs. 10 and 11 show exemplary applications of the present method in work sites and warehousing environments, in accordance with certain embodiments of the present disclosure.

## DETAILED DESCRIPTION

Disclosed herein are a system, method, and computer program product for detecting and classifying one or more targets within a physical environment, based, at least in part, on analyzing various parameters of wireless transmissions emitted from one or more RF devices associated with each target.

In some embodiments, the wireless transmission parameters comprise at least wireless transmission signal parameters, wireless transmission data content, and/or wireless transmission locational parameters.

In some embodiments, the present disclosure provides for detecting and classifying one or more targets within a physical environment or a scene, based on analyzing various parameters of wireless transmissions emitted by wireless devices associated with these targets, and/or various movement parameters associated with these targets.

In some embodiments, the present disclosure provides for detecting and classifying one or more targets within a physical environment or a scene, based on analyzing various parameters of wireless transmissions emitted by wireless devices associated with these targets and/or various movement parameters associated with these targets, wherein the detection further comprises identifying and/or classifying the targets into one or more categories or classes based on target type.

In some embodiments, the present disclosure provides for detecting and classifying one or more targets within a physical environment or a scene, wherein the detection and identification may comprise at least one of:

- Device detection: Detecting the existence of a target associated with a wireless device within the environment based on wireless transmission parameters such as frequency analysis, signal strength analysis, etc.

- Device identification: Identifying a type of device based on transmission parameters (e.g., time stamps, transmitting frequencies, locations, etc.) and by data encoded in the transmission and/or a set of identification parameters (e.g., MAC address, Bluetooth address, frequency hopping pattern, carrier frequency, time difference duplex pattern, etc.).

- Target classification: Classifying targets into discrete classes characterized by a set of features, such as type of transmitting device (mobile phone, wireless headphones, headset, smartwatch, etc.), transmitting protocol (2G, 3G, 4G, 5G, LTE, Wi-Fi, etc.), type of user (vehicle, person) and user sub-types (car, scooter, bicycle, motorcycle, passenger, driver, pedestrian, etc.).

The present disclosure may be implemented is variety of applications in which detecting and localizing targets within a physical scene based on wireless emissions may be desirous or critical for operational and/or safety reasons. For example, in some embodiments, target detection and classification according to the present disclosure may be implement as part of a municipal or urban traffic safety program, to detect and localize pedestrians, cyclists, and micro-mobility users; asses hazardous situations involving these users; and issue appropriate alerts to users and authorities and/or operate road signs and signals to avoid or mitigate danger.

Similar systems may be implemented in other environments, e.g., in work sites and mining sites where workers on foot combine with heavy machinery; in manufacturing facilities and warehouses; in public buildings and venues; in parking garages; in marine applications; in combat scenarios; and the like.

In some embodiments, the present disclosure may be particularly useful in conjunction with detection of targets where visual detection modalities are not feasible or impractical. For example, in the case of partially- or wholly-obscure targets; targets that are challenging to detect using visual detection techniques, e.g., because they typically have less well-defined features which facilitate detection; targets that are out of a field-of-view or line-of-sight of a visual detection modality; targets that are located behind reflective surfaces (e.g., vehicles occupants located behind glass windshield) or in areas with challenging or varying lighting and visibility conditions; and the like.

In some embodiments, the physical scene may be defined as a Region of Interest (ROI) whose parameters may be determined based on the application. In some embodiments, the present disclosure may define an object located in the ROI as a target.

For example, in the case of automotive applications in a moving vehicles, an ROI of the present disclosure may be a region comprising an environmental coordinate field corresponding to a physical envelope surrounding the vehicle. In some embodiments, the ROI may have a defined shape, e.g., circle, rectangle, oval, or an abstract shape around the vehicle.

In other applications, in the case of facility- or landscape-based installation, the coordinate field may correspond to a particular area, region, path, junction, field, building, venue, facility, park, and/or any portion thereof.

In some embodiments, the ROI may be defined as a particular vehicle, e.g., a car, bus, train car, marine vessel, etc.

In some embodiments, the environmental coordinate field can correspond to a non-vehicle centric coordinate field, for example, a world coordinate system, a path-centric coordinate field, or the like.

The present disclosure will discuss extensively as a non-limiting example the use of the present method for target detection and classification in the context of traffic safety and automotive applications. However, as noted above, similar systems may provide advantages in many other applications and implementations.

For example, a target detection and classification system according to the present disclosure may provide particular advantages in the context of autonomous driving (AD) and advanced driver assistance systems (ADAS), as a primary or supplementary detection system.

By way of background, most current vehicles have a suite of ADAS systems that provide a combination of enhanced safety, driver assistance, and autonomous driving features, such as adaptive cruise control (ACC) systems, blind spot monitoring, collision avoidance systems, pedestrian protection systems, and the like. ADAS systems may take on parts of the driving tasks of the vehicle driver, including the detection of environmental information relevant to the safe operation of the vehicle.

Vehicles comprising ADAS systems usually include a sensor set comprising one or more sensors which enable the functioning of the ADAS systems, such as, but not limited to, camera-based, radar-based, and/or LiDAR-based sensor sets. The data from the sensors may describe, e.g., the physical environment or roadway environment where the vehicle is located, static and dynamic objects within this physical environment, the position of the vehicle relative to the static and dynamic objects, the weather, other natural phenomena within the physical environment, and the operation of the suite of ADAS systems in response to the static and dynamic objects.

Dynamic objects may include one or more objects of the roadway environment that are dynamic in terms of their motion or operation, such as other vehicles present in the roadway, pedestrians, animals, traffic lights, and/or environmental factors (e.g., wind, water, ice, variation of sun light).

ADAS and/or autonomous vehicle environment perception is a critical component. ADAS perception uses data from various sensors (e.g., camera, Radar, Lidar, etc.), to detect objects in the environment (e.g., other vehicles, pedestrians, signs, road hazards) which may be relevant to the operation of the ADAS systems, and by extension, the operation and safety of the vehicle and its occupants. Thus, accurate environmental perception enables ADAS systems to correctly determine operational commands to the vehicle, such as acceleration, deceleration, breaking, and/or steering.

ADAS and Autonomous Driving (AD) systems are using sensors (such as radio detection and ranging (RADAR), a camera, light detection and ranging (LiDAR) sensor, and an ultrasonic sensor for perception and decision tasks. Perception algorithms are used for: detection and tracking of objects (vehicles, pedestrian, road hazards) and localization (the accurate location of the vehicle), decision algorithms are used for path planning and obstacle avoidance, and actuation algorithms are used for setting the vehicle acceleration, deceleration, braking, and steering commands.

ADAS sensors typically depend on a clear line of sight to the object to be detected, hence obstructions caused by topography, infrastructure (buildings, junctions, etc.), vehicles, weather, etc., limit detection capability. Due to the line of sight limitation, these sensors have a specific field of view which is typically up to 120°. Thus, a surround (360°) detection requires at least three sensors that affect the cost of the vehicle and will not be a cost-effective solution. Typically, during the product design phase, there is an optimization process of the detection algorithms for reducing the false alarm rate while keeping the probability of detection as high as possible. A typical scenario, for example, is of a pedestrian who is partially obscured while walking between two vehicles. Increasing the probability of detection in similar scenarios might lead to an increase in the false alarm rate in other scenarios.

Thus, current ADAS systems are limited in their ability to detect, identify, and classify pedestrian, other non-vehicular, and/or partially visible or visually-obscured road targets, e.g., road users. For example, pedestrians, bicycle riders, and other similar non-vehicular road users are mainly present on roadsides and sidewalks, and thus are often partially or completely obscured and/or out of the field of view on road vehicles. When these road users suddenly emerge on the road, e.g., from behind an obstacle of infrastructure feature, it is may be too late for the ADAS to act quickly enough to avoid a potential hazard.

In addition, detection and identification of non-vehicular and/or at least partially obscured targets based solely on vision and radar sensor modalities is more challenging, because these targets typically have less well-defined features which facilitate detection.

Most of the ADAS systems are based on visual and/or radar detection modalities which must perform the complex task of identifying pedestrians while walking, riding bikes, crossing the road, emerging between vehicles, etc. These detection modalities are highly sensitive to environmental conditions such as changing lighting conditions, fog, rain, direct sunlight, etc. The ambient conditions may result in an ADAS system which has a high rate of false alarms.

One possible solution is for detecting pedestrians may be, e.g., installing an application on wireless devices of pedestrians, to allow their detection in a traffic environment. Although this solution can overcome some of the limitations associated with detecting non-vehicular objects, it has some drawbacks. Typically, these applications rely on GPS information from the target wireless device, which has limited accuracy and thus cannot determine location with sufficient resolution. For example, the best-case scenario for locational accuracy achieved with a mobile phone GPS sensor is typically within 5 meters and thus not sufficiently accurate for determining an exact location within a typical roadway environment. Another potential limitation is the requirement to install the application on users' wireless devices and network latency in sending and receiving location messages.

Accordingly, in some embodiments, the present disclosure provides for detection, identification and/or classification of targets within a physical environment. In some embodiments, in the context of transportation and roadways environments, such targets are, e.g., pedestrians, bicycle riders, and other similar non-vehicular road users. In some embodiments, the detection and classification is, based, at least in part, on detecting and analyzing wireless transmissions emitted from one or more wireless devices associated with each target. Such target wireless devices may include any one or more of a mobile phone, wireless headphones, a headset, a smartwatch, and the like.

In other embodiments, the present disclosure provides for a stand-alone detection system based on target wireless device detection and analysis. In some embodiments, the present disclosure may be configured to be employed in conjunction with one or more other detection modalities, e.g., a vehicle's ADAS system, as a primary, additional, or supplementary detection modality. By combining common ADAS detection modalities with target wireless device detection, the present disclosure may help to increase detection accuracy and reduce the rate of potentially hazardous situations.

A potential advantage of the present disclosure is, therefore, in that it provides for robust detection, identification, and/or classification of target or objects in an environment, based on wireless transmission associated with the objects, and thus may allow for an early detection and alert system for use in, e.g., vehicular applications, marine applications, industrial and commercial facilities, military applications, and the like.

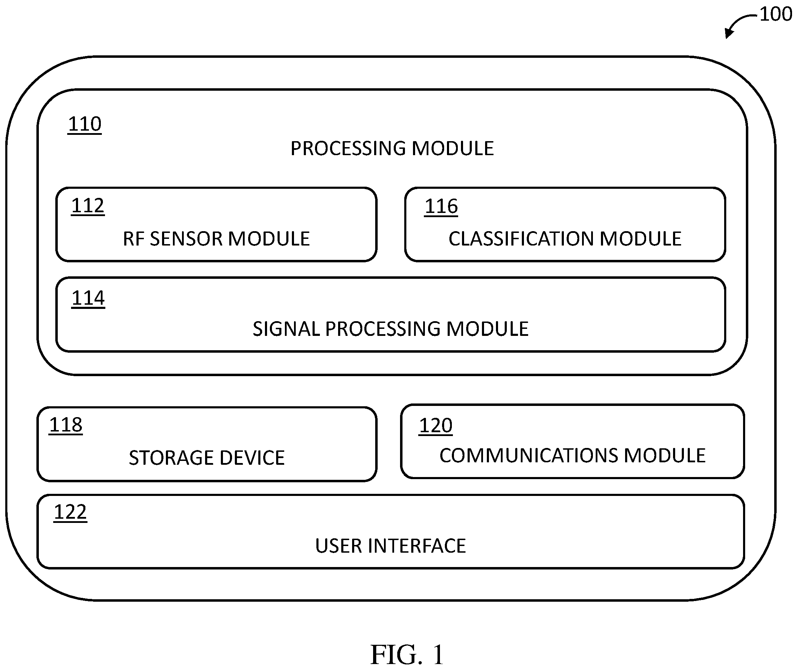

Fig. 1 is a high level schematic block diagram of an exemplary system **100** for detecting targets within a physical environment, in accordance with certain embodiments of the present disclosure.

In some embodiments, system **100** may be a land and/or aerial and/or marine vehicle-mounted, urban micro mobility-mounted, pedestrian-mounted, personnel-mounted, infrastructure-mounted, industrial and commercial equipment-mounted, automated assembly line facilities and equipment-mounted, and/or home appliances-mounted.

System **100** as described herein is only an exemplary embodiment of the present invention, and in practice may have more or fewer components than shown, may combine two or more of the components, or may have a different configuration or arrangement of the components. The various components of described herein may be implemented in hardware, software or a combination of both hardware and software. In various embodiments, these systems may comprise a dedicated hardware device, or may form an addition to/or extension of an existing device.

System **100** may store in a storage device **118** software instructions or components configured to operate a processing module **110** (also "CPU," or simply "processor"). In some embodiments, the software components may include an operating system, including various software components and/or drivers for controlling and managing general system tasks (e.g., memory management, storage device control, power management, etc.) and facilitating communication between various hardware and software components.

In some embodiments, the software components of system **100** may comprise an operating system, including various software components and/or drivers for controlling and managing general system tasks (e.g., memory management, storage system control, power management, etc.) and facilitating communication between various hardware and software components.

In some embodiments, processing module **110** control and operates, e.g., an RF sensor module **112,** signal processing module **114,** classification module **116,** a communications module **120,** and/or a user interface **122.**

In some embodiments, system **100** comprises RF sensor module **112**. In some embodiments, RF sensor module **112** may comprise an array of sensors comprising one or more sensors or any other components configured for transmitting, receiving, powering, amplifying, and/or performing any other operation with respect to wireless signals, e.g., radio-frequency (RF) signals. In some embodiments, RF sensor module **112** at least one antenna configured to detect RF signals. In some embodiments, RF sensor module **112** may be integrated with or form a part of any sensor array within a vehicle, e.g., an ADAS sensor array.

In some embodiments, RF sensor module **112** may further comprise one or more other sensors, for example: one or more ultrasonic sensors; one or more RADAR sensors; one or more Light Detection and Ranging ("LiDAR") sensors; one or more surround cameras (typically are located at various places on vehicle body to image areas all around the vehicle body); one or more stereo cameras e.g., to provide depth-perception for object detection and object recognition in the vehicle path); one or more infrared cameras; GPS unit that provides location coordinates; a steering sensor that detects the steering angle; speed sensors (one for each of the wheels); an inertial sensor or inertial measurement unit ("IMU") that monitors movement of vehicle body (this sensor can be for example an accelerometer(s) and/or a gyro-sensor(s) and/or a magnetic compass(es)); tire vibration sensors; and/or microphones placed around and inside the vehicle. In some embodiments, sensor unit **112** may comprise, e.g., one or more of a global positioning system sensor; an infrared detector; a motion detector; a thermostat; a sound detector, a carbon monoxide sensor; a carbon dioxide sensor; an oxygen sensor; a mass air flow sensor; an engine coolant temperature sensor; a throttle position sensor; a crank shaft position sensor; an automobile engine sensor; a valve timer; an air-fuel ratio meter; a blind spot meter; a curb feeler; a defect detector; a Hall effect sensor; a manifold absolute pressure sensor; a parking sensor; a radar gun; a speedometer; a speed sensor; a tire-pressure monitoring sensor; a torque sensor; a transmission fluid temperature sensor; a turbine speed sensor (TSS); a variable reluctance sensor; a vehicle speed sensor (VSS); a water sensor; a wheel speed sensor; and any other type of automotive sensor. In some embodiments, other sensors may be used, as is known to persons of ordinary skill in the art.

In some embodiments, classification module **116** can execute classification algorithms with respect to received data, to generate predictions associated with detecting and classifying targets within a physical environment or a scene. In some embodiments, classification may be defined as the task of generalizing a known structure to be applied to new data. The terms "detection," "classification" and "prediction" are used herein interchangeably for reasons of simplicity, and are intended to refer to any type of output of a machine learning model. This output may be in the form of a class and a score which indicates the certainty that the input belongs to that class. Various types of machine learning models may be configured to handle different types of input and produce respective types of output; all such types are intended to be covered by present embodiments. The terms "class," "category," "category label," "label," and "type" when referring to objects, can be considered synonymous terms with regard to the classification of an object. The terms "machine learning model" and "machine learning classifier" are used interchangeably, and may be abbreviated "model" or "classifier" for simplicity. These terms are intended to refer to any type of machine learning model which is capable of producing an output, be it a classification, a prediction, or generation of new data, based on input. Classification algorithms can include linear discriminant analysis, classification and regression trees/decision tree learning/random forest modeling, nearest neighbor, support vector machine, logistic regression, generalized linear models, Naive Bayesian classification, and neural networks, among others.

In some embodiments, signal processing module **114** may be configured to analyze RF signals received by RF sensor module **112,** and estimate one or more parameters with respect to the emitting device, including, but not limited to, measuring and estimating the relative position, orientation, distance, speed and/or acceleration of an RF emitting device.

In some embodiments, communications module **120** may be configured for connecting system **100** to a network, such as the internet, a local area network, a wide area network and/or a wireless network. In some embodiments, the network is a local network within a vehicle. In some embodiments, communications module **120** facilitates communications with other devices over one or more external ports, and also includes various software components for handling data received by system **100.**

In some embodiments, user interface **122** comprises one or more of a control panel for controlling system **100,** buttons, display monitor, and/or speaker for providing audio commands. In some embodiments, system **100** includes one or more user input control devices, such as a physical or virtual joystick, mouse, and/or click wheel. In some embodiments, use interface **122** may be incorporated, e.g., into a driver and/or another operator interface of a vehicle in which system **100** is installed. In some embodiments, user interface **122** may be configured to issue alerts to a user of system **100,** e.g., a driver, an operator of a vehicle, and the like.

In other variations, system **100** comprises one or more of peripheral interfaces, RF circuitry, audio circuitry, a microphone, an input/output (I/O) subsystem, other input or control devices, optical or other sensors, and an external port. Each of the above identified modules and applications correspond to a set of instructions for performing one or more functions described above. These modules (i.e., sets of instructions) need not be implemented as separate software programs, procedures or modules, and thus various subsets of these modules may be combined or otherwise re-arranged in various embodiments.

In some embodiments, system **100** may be further configured to communicate and/or cooperate with an ADAS suite of a vehicle in which system **100** is installed, e.g., through communications module **120,** to provide data to the ADAS suite which may lead to adjustments in operational commands to the vehicle, such as acceleration, deceleration, breaking, and/or steering. In some embodiments, processing module **110** may be further configured to perform decision and/or planning functions which use the data from RF sensor module **112,** signal processing module **114,** and/or classification module **116,** for forward planning of the vehicle path. Forward planning decisions may then be sent as command signals to operate vehicle systems, e.g., via a Controller Area Network data interface ("CAN bus")-a network inside modern cars used to control brakes, acceleration, steering, windshield wipers, etc.

In some embodiments, system **100** and/or any module or component thereof may be installed onboard a vehicle and/or externally to a vehicle (e.g., in the cloud). In some embodiments, system **100** is a vehicle-mounted system and its components may be mounted on any part of the vehicles.

In some embodiments, some or all of the modules and components of system **100** may be integrated into the systems of a vehicle. In some embodiments, system **100** may further implement various techniques, including but not limited to, computer vision algorithms and/or signal processing algorithms, which detect key points and features in the vehicle and its surroundings. In some embodiments, the algorithms may use a database of predefined parameters to improve accuracy, precision, and processing time. Furthermore, the algorithms may use user input regarding the vehicle under measurement such as make, model, model year, etc.

Currently, vehicles, pedestrian, and road infrastructure features may use RF and/or other wireless communication protocols employing any one of a wide variety of protocols, including, but not limited to V2X (V2V, V2I, V2P, V2C), mobile networks (2G, 3G, 4G, 5G, LTE, 4G-FDD, 4G-TDD, CV2X), Dedicated Short-Range Communications (DSRC), WiFi, Zigbee, LoRa, Bluetooth, and Differential GPS (DGPS). Furthermore, other vehicle components, e.g., radar sensors, may be RF emitting devices.

Generally, all RF transmissions follow one or more of known standards and protocols for radio transmission. Accordingly, by monitoring various transmission parameters (e.g., frequency bands), it is possible to detect, identify and classify RF emitting devices, and in particular wireless devices such as smartphones, cellular phones, wireless headsets, smart watches, etc.

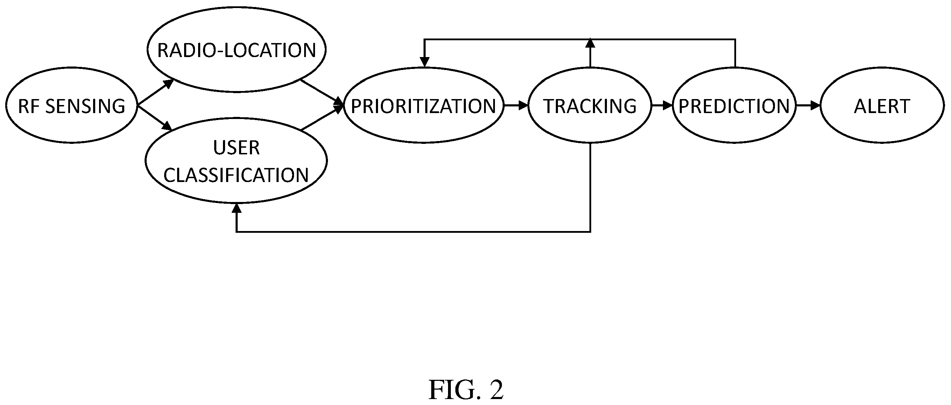

Fig. 2 is a block diagram of the functional steps in a process for detecting targets within a physical environment, in accordance with certain embodiments of the present disclosure, based, at least in part, on detecting and analyzing wireless transmission emitted from one or more wireless devices associated with these targets. Such target wireless devices may include any one or more of mobile phone, wireless headphones, headset, smartwatch.

In some embodiments, the present process comprises the functional steps of RF sensing and/or detecting, localization, prioritization, tracking, prediction/classification, and alert issuance.

In some embodiments, as noted above, system **100** may be Wi-Fi aware, etc., i.e., configured to provide for quick discovery, connection, and data exchange with devices in the surrounding environment over any RF protocol, e.g., Wi-Fi, Bluetooth, etc. In some embodiments, RF sensor module **112** may include an RF array comprising RF transmission receivers, detectors, and transmitters. In some embodiments, sensor array **112** may also comprise, e.g., Wi-Fi and/or Bluetooth network communication and management functions. In some embodiments, RF sensor module **112** may be compatible with Wi-Fi, Bluetooth, and/or neighbor aware network (NAN), wireless LAN network and/or wired LAN network, cellular networks, and/or V2X communication networks. After detecting and identifying an RF transmission signal of a target device by the RF detection array, the signal processing array estimates direction and distance to that device, and may use Bluetooth, Wi-Fi, cellular, and/or V2X transmission parameters at both the physical and data layers.

For example, by detecting a transmission frequency used by a device, system **100** can classify and position any surrounding operational and transmitting personal devices. Afterwards, system **100** may fuse transmitters or communication personal devices located in the same position into one identified device or object (e.g., a cellular phone can transmit in W-Fi, Bluetooth and cellular at the same time). The personal devices carried by users or objects may be tracked by the main processing unit, may be prioritized, and their parameters may be sent to the vehicle ADAS system.

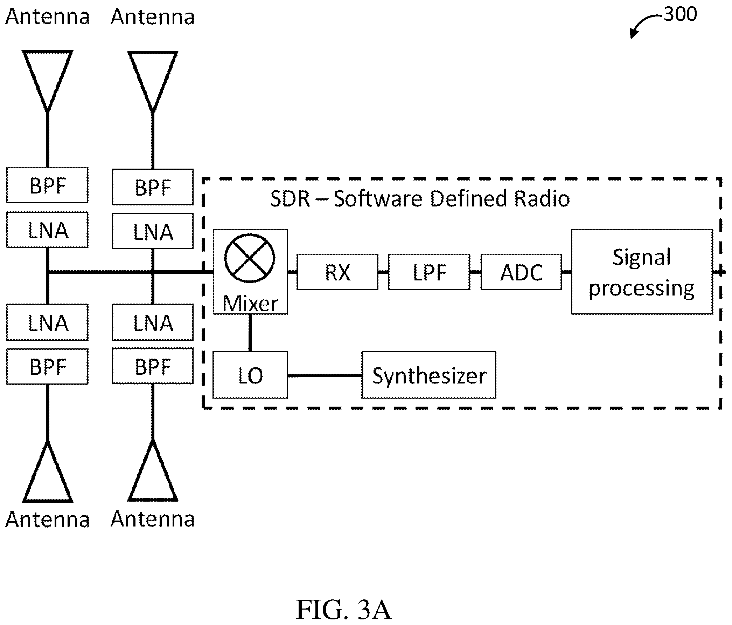

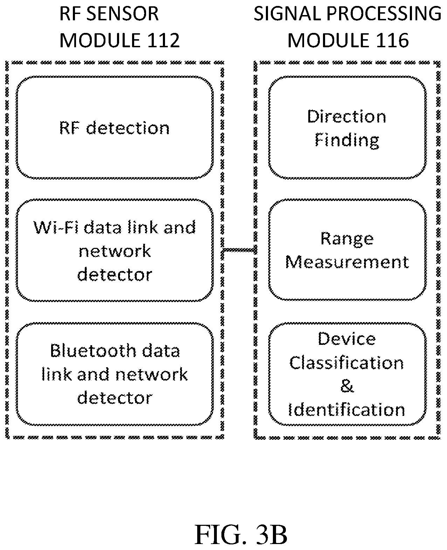

Fig. 3A schematically illustrates an exemplary architecture of an RF detection array **300** used by system **100** as part of RF sensor module **112,** according to some embodiments. Fig. 3B schematically illustrates an RF array **300** which may be part of RF sensor module **112,** and signal processing module **114.**

Array **300** may include one or more antennas and/or antenna arrays and/or similar elements and/or components to allow system **100** to detect, calculate and/or estimate distance, location, orientation, and/or trajectory of an RF emitting device by the signal processing module **114.** The system may be passive, receiving RF signals, or active, transmitting and receiving RF signals. One or more detection systems may be used to improve accuracy and detection capabilities.

The RF detection array may include one or more RF signal receivers for receiving RF signals generated by an RF emitting device, comprising, e.g., omnidirectional and/or directional antenna, a BPF (Band Pass Filter), and/or LNA (Low Noise Amplifier) to improve the received signal SNR (Signal to Noise Ratio). Array **300** may include a Software Defined Radio (SDR), Analog to Digital convertor (ADC), an RF mixer, Low Pass Filter (LPF), and a signal processing unit. Array **300** may further include one or more RF power detectors for detecting the signal strength of each of the RF power signals received, and a phase detector generating output signals indicative thereof.

In some embodiments, signal processing module **114** may be configured to measure and estimate the relative position of an RF emitting device. In some embodiments, Received Signal Strength Indicator (RSSI), round-trip time (RTT), Triangulation, DRSSI (differential RSSI) and flight time measurement (FTM) methods may be used to measure the distance between the RF emitting device and the detection system based on the measurement of received signal strength and multilateration (multiple distance measurement from known different points). In some embodiments, one or more of the following parameters may be used: AOA - Angle of Arrival, CRLB - Cramer Rao Lower Bound, CEP - Circular Error Probable, DDOP- Differential Doppler, DF - Direction Finding, DFOA - Differential Frequency of Arrival, DOA - Direction of Arrival, DPD - Direct Position Determination, DTOA - Differential Time of Arrival, EM - Expectation Maximization, ESPRIT - Estimation of Signal Parameters via Rotational Invariance Techniques, FDOA - Frequency Difference of Arrival, GDOP - Geometric Dilution of Precision, IQML - Iterative Quadratic Maximum Likelihood, LOP - Line of Position, ML - Maximum Likelihood, MLE - Maximum Likelihood Estimator, and MUSIC - Multiple Signal Characterization. In some embodiments, any one or more of these techniques may be used to determine the position of the RF emitting device relative to the location of system **100**. In some embodiments, system **100** may use 2D, 3D, and/or high definition mapping data in order to achieve higher performance, e.g. omitting objects that are outside of the region of interest and hence not relevant to the system (for example detecting a person far from the road). In some embodiments, array **300** may further comprise one or more dedicated RF beacons in order to improve detection capabilities of paired beacons carried by objects within a defined area, e.g., commercial and/or manufacturing facilities, warehouses, school zones, etc. The RF beacon may use a unique authorized RF frequency or it may be based on common protocol such as but not limited to Bluetooth, WiFi, ZigBee, Cellular (V2X, DSRC, 5G, LTE, 4G, 3G, 2G) transmitter, or passive RF elements as RFID.

In some embodiments, system **100** may be configured to communicate with a dedicated application installed on target wireless devices, to cause the target wireless device to transmit a periodic identification signal using any of the available transmitters in the target wireless device (LTE, 5G, WiFi, Bluetooth, CV2X, etc..).

In some embodiments, system **100** may be able to detect and read use of network managing and control messages and/or packets and address of target wireless devices, by any transmission protocol (Wi-Fi, Wi-Fi aware, Bluetooth, ZigBee, etc.). In some embodiments, correlating such information with the physical signal parameters may improve system accuracy and/or add semantic context regarding device state (e.g., paired, unpaired, busy, etc.).

In some embodiments, system **100** may further include an object tracking module. This module may use various types of tracking algorithms based on target device parameters, frequency hopping patterns, and/or a Doppler-based algorithm or positional tracking algorithm, which tracks the personal device properties such as velocity, distance, direction, type, etc., to improve the personal device classification, position and confidence level.

In some embodiments, system **100** may be configured to quickly connect and transmit messages and/or network control messages to target wireless devices in the vicinity, to alert device users of the presence of the vehicle with which system **100** may be associated. In some embodiments, this may be performed by establishing a momentary wireless connection with nearby emitters. It may be done by encouraging the emitters to scan for access points nearby and detecting them. It may also be done by using Wi-Fi aware capability or and NAN networks.

In some embodiments, system **100** may be configured to scan and/or detect all RF transmission channels by an emitting target wireless device in the environment, e.g., control channels, downlink channels for voice, downlink channels for data, uplink channels for voice, and uplink channels for data. In some embodiments, system **100** may monitor all of these channels and/or monitor a specific channel which allows better performance such as detection range, signaling rate, identification information, etc.

In some embodiments, identification of target wireless devices may include detecting one or more of device identification parameter, device features, device make and model.

Distance Estimation

In some embodiments, signal processing module **114** of system **100** may be configured to estimate a distance to a transmitter/emitter target wireless device within an environment of system **100** using, e.g., by differential received signal strength measures.

In some embodiments, as a non-limiting example, measuring a distance to an RF transmitting device, such as a target wireless device, may be performed using RSSI (received signal strength indicator), wherein a distance to the emitter may be estimated based on the strength of the received signal. However, this method presents relatively low accuracy because received signal levels may vary significantly due to transmitter gain, transmitter position, transmitter antenna gain, obscuration, reflections, and etc.

The formula for estimating distance by RSSI can be described by:

$$P_r = P_t + G_t + G_r - L \ [dBm]$$

where:

- $P_r$ - Observed Power

- $P_t$ - Transmitted Power

- $G_t$ - Transmitter antenna gain

- $G_r$ - Receiver antenna gain

- $L$ - Channel path loss

The distance can be given by:

$$10 \log_{10}(d) = \frac{1}{\alpha} \left\{ P_t - P_r + G_t + G_r - 20 \log_{10}\left(\frac{4\pi f}{c}\right) \right\}$$

where

- $f$ - frequency

- $c$ - propagation speed

- $d$ - distance

- $\alpha$ - coefficient (*typicall between 2 to* 4)

$P_t$, $G_t$ and $\alpha$ are unknown coefficients that contribute to the distance error.

In order to reduce the error, signal processing module **114** may use a differential RSSI method, wherein the observed power $P_r$ is measured in at least three different locations within a short period of time, and the speed of the vehicle in which system, **100** is installed is known and thus the distance between the sampling points. This provides three unknown variables ($P_t$+$G_t$; $\alpha$; $d$). Assuming that the transmitter hasn't moved much between sample to sample therefor the distance, $d$ can be estimated with higher accuracy than standard RSSI, as described:

$$R \triangleq P_t + G_t + G_r$$

$$\begin{cases} \alpha 10 \log_{10}(d) = R - P_r - 20 \log_{10}(4\pi f / c) \\ \alpha 10 \log_{10}(d - \Delta_1) = R - P_{r1} - 20 \log_{10}(4\pi f / c) \\ \alpha 10 \log_{10}(d - \Delta_2) = R - P_{r2} - 20 \log_{10}(4\pi f / c) \end{cases}$$

$$\begin{cases} \alpha 10 \log_{10}\left(\frac{d}{d - \Delta_1}\right) = P_{r1} - P_r \\ \alpha 10 \log_{10}\left(\frac{d}{d - \Delta_2}\right) = P_{r2} - P_r \end{cases}$$

$$\frac{\log_{10}\left(\frac{d}{d - \Delta_1}\right)}{\log_{10}\left(\frac{d}{d - \Delta_2}\right)} = \frac{P_{r1} - P_r}{P_{r2} - P_r} \triangleq B$$

$$\frac{d}{d-\Delta_1} = \left(\frac{d}{d-\Delta_2}\right)^\beta \Rightarrow \frac{d-\Delta_1}{d} = \left(\frac{d-\Delta_2}{d}\right)^\beta \Rightarrow$$

$$1 - \frac{\Delta_1}{d} = \left(1 - \frac{\Delta_2}{d}\right)^\beta$$

As shown above, the distance $d$ can be estimated by a numerical calculation without having the need to use high computational power.

In some embodiments, signal processing module **114** may be further configured to improve distance estimation to a transmitter/emitter device, by using classification and positional data. As described above, when using RSSI, there are three free coefficients which need to be estimated, and this may create inaccuracies. The coefficients are:

- $\alpha$ - *coefficient* (*typicaaly between 2 to* 4)

- $P_t$ - *Transmitted Power*

- $G_t$ - *Transmitter antenna gain*

The variable $\alpha$ is related to the environment, ranging from the value of $\alpha = 2$ in free space, and up to $\alpha = 4$ in indoor and dense urban environments. By using the location provided by the vehicle navigation system and mapping data, the $\alpha$ parameter can be evaluated more accurately. $P_t$ and $G_t$ can then be estimated based on an identification and/or classification of the device type, e.g., smartphone transmission power (*Pt*) is about 25 *dBm* and the antenna gain is about 3 *dBi.* By better estimating these parameters, a more accurate distance estimation can be achieved.

In some embodiments, signal processing module **114** may provide for estimating distance to a Wi-Fi device. When estimating distance to a Wi-Fi transmitter, signal processing module **114** may use FTM (flight time measurement) or RTT (round trip time) in order to estimate the distance between the vehicle carrying system **100** and the target wireless device which may be carried by a pedestrian.

In some embodiments, signal processing module **114** may provide for estimating distance to a transmitter/emitter by direction finding. In order to estimate distance to a target wireless device, signal processing module **114** may use two or more RF arrays, each configured to separately measure an orientation to the target wireless device. By measuring two or more angles, signal processing module **114** may calculate the relative distance by triangulation.

In some embodiments, additional and/or other distance estimation methods may be employed.

Device Detection and Identification

In some embodiments, signal processing module **114** may provide for detecting, identifying and classifying non-cooperative Bluetooth devices. Common Bluetooth devices may be in a non-cooperative mode, e.g., when the device is paired with another device (e.g., mobile phone paired with headphones), or when it is in a non-discoverable mode. In such cases, signal processing module **114** may be configured to communicate with the target wireless device using its MAC (media access control) address or Bluetooth address (BD_ADDR). The structure of the Bluetooth address is:

| AA:BB: | CC: | DD:EE:FF |
|--------|-----|----------|
| NAP    | UAP | LAP      |

- OUI - Organizationally Unique Identifier

- NAP - Non-significant Address Part (2 bytes). Contains first 16 bits of the OUI. The NAP value is used in Frequency Hopping Synchronization frames.

- UAP - Upper Address Part (1 byte). Contains remaining 8 bits of the OUI. The UAP value is used for seeding in various Bluetooth specification algorithms.

- LAP - Lower Address Part (3 bytes). This portion of the Bluetooth Address is allocated by the vendor of the device. The LAP value uniquely identifies a Bluetooth device as part of the Access Code in every transmitted frame.

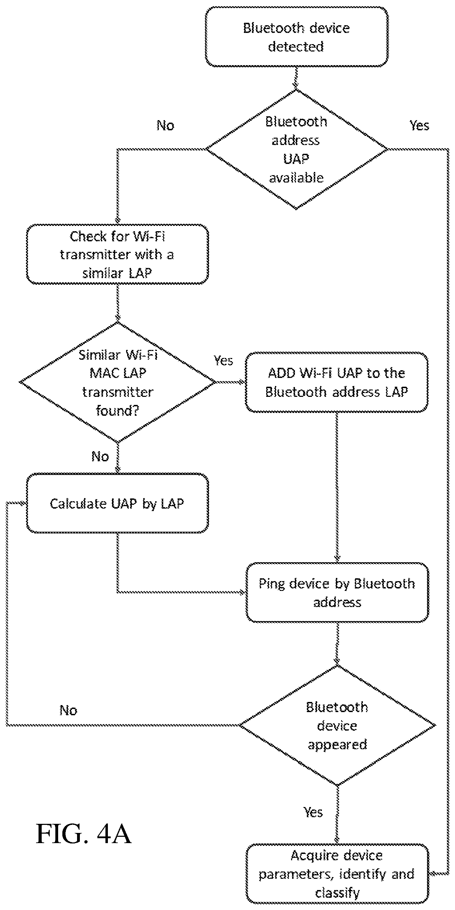

Fig. 4A is a flowchart of the steps in a method for distance estimation of a non-cooperative Bluetooth device. In some embodiments, only device LAP may be detected. In some embodiments, if the Bluetooth device is undiscoverable, than none of its address elements may be discoverable. In some mobile devices, the Wi-Fi and Bluetooth MAC addresses are identical or reflect only minute differences in the LAP last section. Thus, a device's Bluetooth UAP MAC address may be:

- Determined by detecting the device's Wi-Fi UAP MAC address, or

- estimated based on the Wi-Fi LAP MAC address.

Communication to a Bluetooth device can be achieved by knowing its LAP and UAP, which allow classifying the device based on a set of parameters that the device is transmitting. Using this process, a full pairing process may be achieved.

In some embodiments, signal processing module **114** may be configured to detect and identify a paired Bluetooth device. In some cases, a target wireless device may be paired with another Bluetooth device, e.g., a headset, earphones, wireless speakers, and/or vehicle handsfree system. in such situations, the is declared as "master" and the other Bluetooth device is declared as "slave," wherein both Bluetooth MAC addresses of the master and slave are merged into the master's MAC address. Hence, in order to detect the paired device, signal processing module **114** may use the parameters transmitted by the target wireless device and/or the Bluetooth device and analyze whether a paired Bluetooth device is presented based on, e.g., the volume and pattern of the data packets transmitted between the paired devices.

In some embodiments, signal processing module **114** may provide for target wireless device detection and identification based on Wi-Fi transmission. Wi-Fi devices using the IEEE 802.11 protocol(s) are commonly used in mobile devices, access points, etc. During its operation, a device transmit its MAC address in order to identify wireless networks or neighbor aware networks.

In some embodiments, signal processing module **114** may classify a Wi-Fi-enabled target wireless device based on one of Service Set Identifier (SSID), Basic Service Set Identifier (BSSID), Extended Basic Service Set (ESS), signal strength, and MAC address.

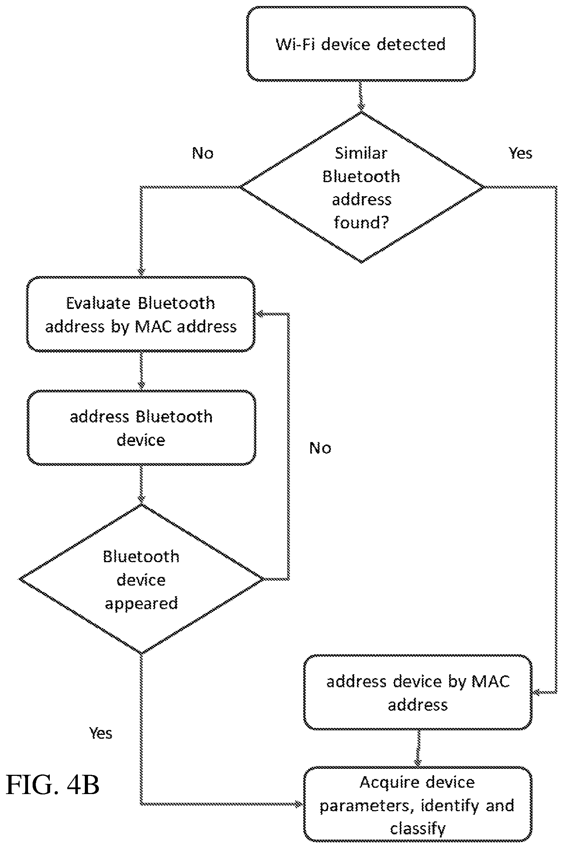

In some embodiments, as shown in Fig. 4B, identifying a Wi-Fi device can be based on the identification of a Bluetooth transmitter in the device, where a device has both Wi-Fi and Bluetooth transmitters.

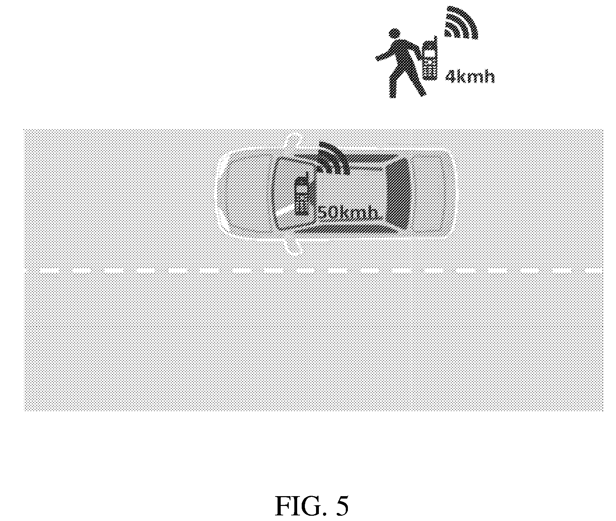

In some embodiments, signal processing module **114** may provide for target wireless device identification based on multiple additional data points, e.g., the wireless device's velocity, location, distance, and direction relative to the location of system **100.** For example, a wireless target device identified as a smartphone and detected as traveling at a high speed may indicate a location within a moving vehicle, while a smartphone advancing at a walking speed may indicate a target that is a pedestrian or cyclist, as shown in Fig. 5. In some embodiments, aggregation of RF emitting devices which share the same properties, such as but not limited to velocity, location, distance and direction, may be used for identification. For example, a cell phone, hands-free Bluetooth device, Wi-Fi device, and an LTE device all moving at the same speed and direction can be used to define an electric scooter object.

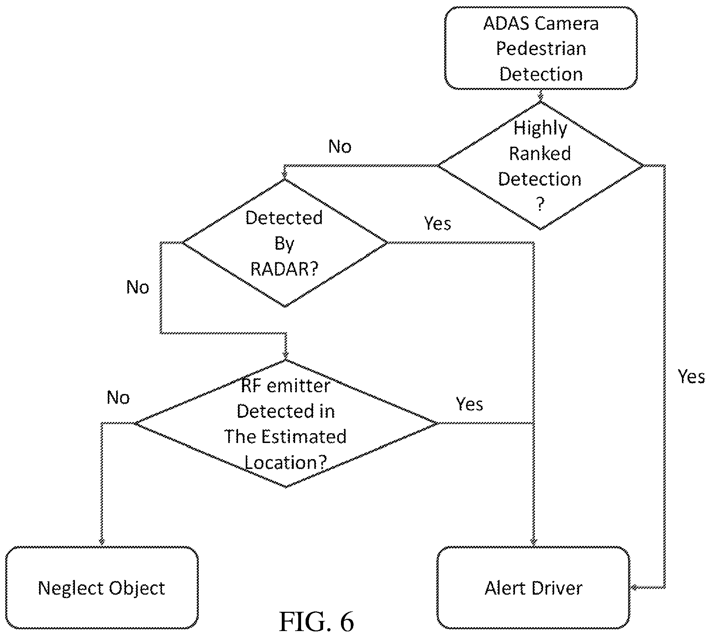

In some embodiments, the present disclosure may be combined with common ADAS visual-based detection modalities, to overcome weaknesses inherent in such modalities. By using a target wireless device detection it may be possible to detect a wireless device associated with a visually-detected target, and thus increase ADAS detection robustness and performances. Furthermore, by using prediction algorithms it is possible to predict dangerous situations that might occur involving non-line of sight or obscure vehicles. An example is presented in Fig. 6. Primary target detection may be performed by a visual detection modality of an ADAS system. In case that the target is, e.g., partially obscured, the ADAS detection algorithm may associate the detection with a low level of certainty. The ADAS system may then combine the visual detection with target wireless device-based detection, to verify and validate the primary detection. Thus, the ADAS system may increase detection certainty level

## Machine Learning Classification

In some embodiments, the present disclosure provides for a trained machine learning model for classifying and/or predicting a target type within a physical environment, based, at least in part, on analyzing various parameters of wireless transmissions as well motion parameters associated with these targets.

In some embodiments, a trained machine learning model of the present disclosure may provide for classifying and/or predicting a target type within a physical environment or a scene, based on analyzing various parameters of wireless transmissions emitted by wireless devices associated with the target.

In some embodiments, such devices may be one or more of: a mobile device, a tablet, a laptop, a micro-mobility mounted telematics unit, a vehicle-mounted telematics unit, a vehicle infotainment system, a vehicles handsfree system, a vehicle tire pressure monitoring system, a smart watch, wireless headphones, a drone, a camera, a dashcam, a printer, an access point, and a kitchen appliance.

In some embodiments, a trained machine learning model of the present disclosure may further provide for classifying and/or predicting a target type as one of: pedestrian, vehicle driver, vehicle passenger, bus driver, bus passenger, truck driver, truck passenger, shared scooter rider, shared bicycle rider, scooter rider, bicycle rider, moped rider, mobility scooter rider, tram passenger, light train passenger, train passenger, car, bus, truck, shared scooter, shared bicycle, scooter, bicycle, moped, mobility scooter, tram, light train, train.

In some embodiments, a trained machine learning model of the present disclosure may further provide for predicting a situational awareness and/or device usage parameters of a target using, e.g., a smartphone, data applications, voice call, content streaming, etc.

In some embodiments, a machine learning model of the present disclosure may be trained on a training dataset comprising data associated with a variety of scenes comprising at least one target, wherein the data points associated with each target are related to wireless transmissions emitted by one or more devices and/or one or more RF transmitters associated with and/or carried but the target. In some embodiments, such data points may comprise data related to:

- Wireless transmission signal parameters,

- wireless transmission data content, and/or

- wireless transmission locational parameters.

In some embodiments, wireless transmission signal parameters and/or data content may include, but are not limited to, signal frequency, signal bandwidth, signal strength, signal phase, signal coherence, packet parameters (type, size, etc.), network topology, unique device identifier (e.g., MAC, SSID, BSSID, ESS, UUID, TIMSI, IMSI etc), signal timing (e.g. when a wireless device uses Time-Division Multiple Access or Time Division Duplex protocols), data packet parameters (type, size, etc.), network topology, signal subcarriers (e.g., Orthogonal Frequency-Division Multiplexing (OFDM)), and Frequency Division Duplex (FDD).

In some embodiments, locational parameters may include, but are not limited to, location and/or movement parameters associated with the target, based on wireless transmission patterns, e.g., location, speed, acceleration, trajectory, jerk, as well as historical information associated with each of these parameters. In some embodiments, locational parameters may be obtained based on continually tracking locational parameters of a target overtime, wherein the various parameters are marked with timestamps. In some embodiments, locational parameters may include locational history annotated with suitable time markings.

In some embodiments, a training dataset of the present disclosure may be annotated with a target category label associated with each target. In some embodiments, annotating and/or labeling a training dataset of the present disclosure may be performed using manual annotation techniques.

In some embodiments, annotation may comprise self-labeling and/or self-supervised techniques, wherein data points in the training set are labeled automatically based on, e.g., other correlated and/or associated data points. In some instances, a target may have a plurality of data points or data instances associated with it, wherein one or more of these data points may provide an indication as to an identification and/or classification of the target. In such instances, when a single or multiple data points provide a ground-truth indication as to identity and/or classification of the target, the entire set of data points may be annotated accordingly. For example, data content obtained from a wireless transmission may provide an indication as to target category or class. For example, a Wi-Fi signal whose SSID contains the word "bus" may be assumed to fall under the category of busses, e.g., a Wi-Fi gateway or access point installed in a bus. In another example, when a wireless transmission indicates a device name as containing the word "iPhone," the device may be assumed to be a smartphone. In yet another example, a location of a target, e.g., highway, pedestrian footpath, or bicycle lane, may provide a ground truth indication as to the target type. In some embodiments, similar or identical MAC addresses of different RF transmission modalities included in the same device may be used for cross-labeling purposes.

Accordingly, all data points in the training set that are associated and/or correlated with the same target may receive a similar category label.

In some embodiments, a training dataset of the present disclosure may comprise data acquired in connection with one or more generated and/or perceived test scenes comprising one or more virtual static and/or dynamic targets. In some embodiments, virtual scene generation may comprise virtualizing, e.g., a roadway environment comprising, e.g., a plurality of static and/or dynamic objects that realistically represent driving scenarios which may be encountered by a vehicle in the real world. In some embodiments, virtual targets may be represented as one or more signals produced and/or transmitted within the environment. In some embodiments, annotation of data obtained using generated test environment may be performed based on ground-truth parameters associated with the generated test environment.

Initial classification

In some embodiments, a training dataset of the present disclosure may be employed as a lexicon and/or databased for preforming initial target classification.

In some embodiments, initial target classification may comprise acquiring one or more data points with respect to a test target, wherein the data points may comprise data related to:

• Wireless transmission signal parameters,

• wireless transmission data content, and/or

• wireless transmission locational parameters,

with respect to the target.

In some embodiments, some or all of these data points may be used for initial classification based on a comparison with data points included in the lexicon, wherein a classification may be obtained by assigning an annotation included in the lexicon to the set of test data points.

In some embodiments, initial classification may be based on a combination of multiple parameters from each of these categories. For example, signal frequency in the NB-IoT spectrum and location on a sidewalk can be classified as a shared scooter. In another example, a device with a Wi-Fi MAC address OUI of a mobile phone, connected to an AP (Access Point) with a SSID which contain the word "bus" can be classified as a passenger inside a bus. In some embodiments, initial classification may be based on device name, e.g., a Bluetooth device name containing the words 'Airpod' or 'Car' may provide indication of the device, and hence its user/target. In yet another example, a Wi-Fi MAC address OUI (Organizationally Unique Identifier) of a mobile phone manufacturer or a vehicle infotainment system manufacturer may indicate a mobile phone and a vehicle equipped with an infotainment system, respectively.

In some embodiments, a lexicon of the present disclosure may comprise a database of known unique identifiers such as SSID, BSSID, ESS, UUID, TIMSI, IMSI MAC, and OUI.

In some embodiment, wireless transmission data content may comprise, e.g., packet information, wherein a large volume of data or voice traffic may indicate active usage of the device by a user, and hence potentially low awareness on part of the user.

In some embodiments, locational parameters may include, e.g., location on a sidewalk or on a road.

Machine Learning Classification

In some embodiments, at a training stage, one or more machine learning models may be trained on a training dataset of the present disclosure. For example, at a training stage, one or more machine learning models may be trained to predict target type based on a training set comprising a plurality of scenarios and associated wireless data comprising at least wireless transmission signal parameters, wireless transmission data content, and/or wireless transmission locational parameters.

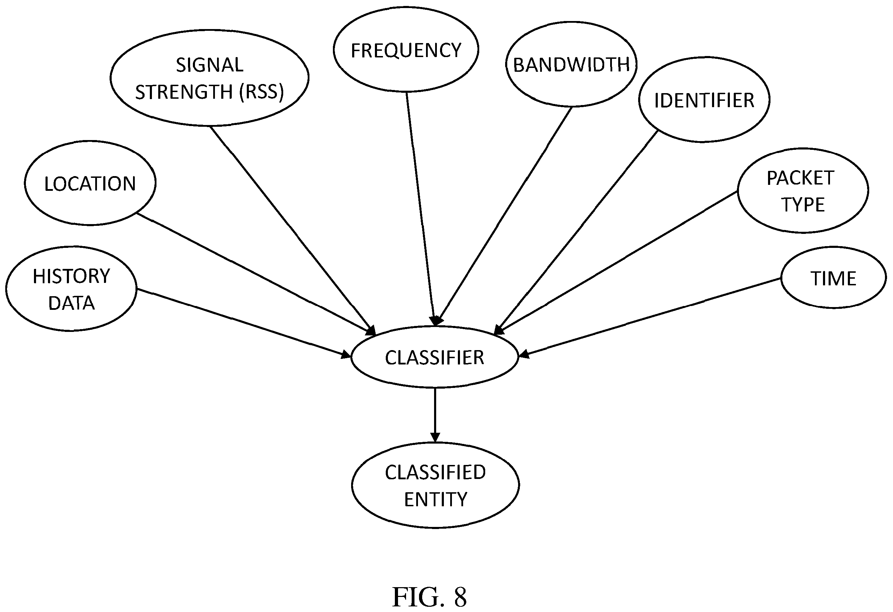

In some embodiments, at an inference stage, as shown in Fig. 8, a trained machine learning model of the present disclosure may be applied to a set of data points associated with a test scenario, to predict a type of one or more targets associated with the test scenario.

In some embodiments, the present disclosure may provide for cascading classifiers operating in a hierarchical manner, wherein an output of multiple first instance classifier may be used as additional information for an aggregating classifier.

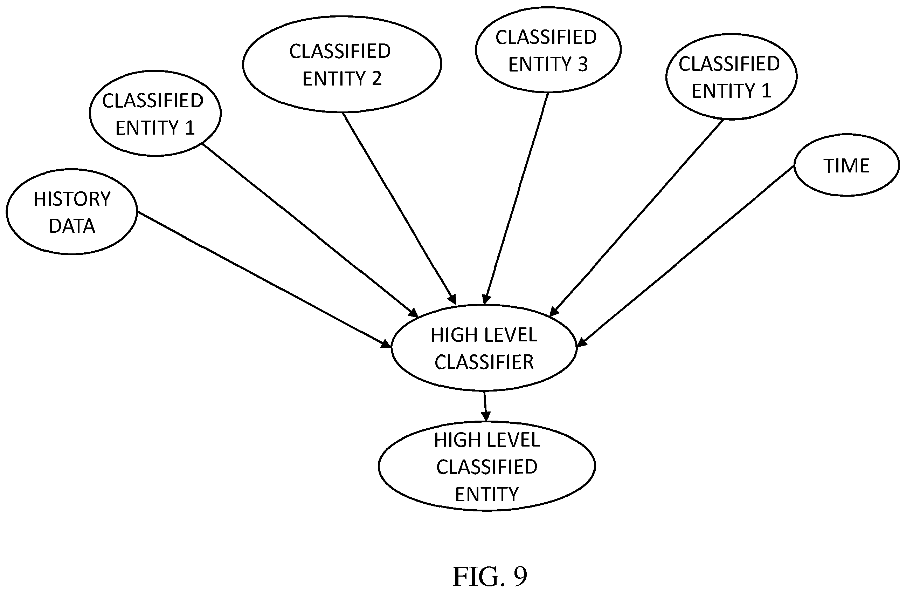

For example, as shown in Fig. 9, in some embodiments, target classification may be based on two or more RF devices associated with a single target. For example, a pedestrian may carry on its person both a smartphone as well as Bluetooth headphones. In this case, both RF devices will be associated with similar locational parameters. In another example, a single device used by a vehicle occupant may transmit in both Wi-Fi and Bluetooth. In this case, both RF transmission should have identical or very similar unique identifiers (e.g., MAC address).

Accordingly, one or more trained machine learning models of the present disclosure may be applied to data obtained from each RF device separately, to output a prediction with respect to the target based on wireless transmission data obtained from each RF device or entity. In some embodiments, the separate predictions may be input into an aggregating classifier which issue a combined prediction with respect to the

**Specific Use Cases**

In some embodiments, a system of the present disclosure, such as system **100** in Fig. 1, may be configured to detect a pedestrian crossing a road. Detecting a pedestrian crossing a road is one of the most crucial tasks for an ADAS system, because crossing pedestrians pose a high level of collision hazard for a vehicle, especially when considering vulnerable populations with low levels of situational awareness such as young children or the elderly. By using target wireless device detection it is possible to detect a device that is carried by the pedestrian (for example smartphones, cellular phones, Bluetooth hands-free, Wi-Fi, etc.). in some embodiments, the device may comprise a dedicated RF beacon or an application configured to cause the device to emit a periodic and/or defined detection signal.

In some embodiments, system **100** may be configured to assess pedestrian situational awareness. Predicting pedestrian behavior is one of the most challenging tasks for ADAS systems, while the intensive use of mobile devices by pedestrians may itself cause a low situational awareness of the pedestrians, which may manifest in crossing a busy road or on a red signal. Accordingly, in some embodiments, by analyzing a target device signal characteristics (e.g., transmission rate, data packet size, transmitting device type, etc.) it is possible to assess a pedestrian's situational awareness. The signal characteristics analysis can allow assessing whether the pedestrian is actively using a mobile phone smartphone to, e.g. text message, make a voice call, stream audio or video content to wireless earphones, etc.

In some embodiments, signal processing module **114** may provide for detecting partially- of wholly-obscured vehicles. Road conditions, topography, sensors field of view, and other parameters are limiting ADAS system's ability to detect vehicles. For example, in junctions where a vehicle may be obscured by infrastructure features, parking cars, and/or topographic height differences. In other examples, truck drivers may find it difficult to detect within a blind zone to the side.

Accordingly, in some embodiments, a target wireless device detection system of the present disclosure may provide for detecting the wireless transmission from emitters located within an environment, but are at least partially obscured. In some embodiments, target wireless device detection may provide for detecting and classifying the target based on wireless transmission analysis.

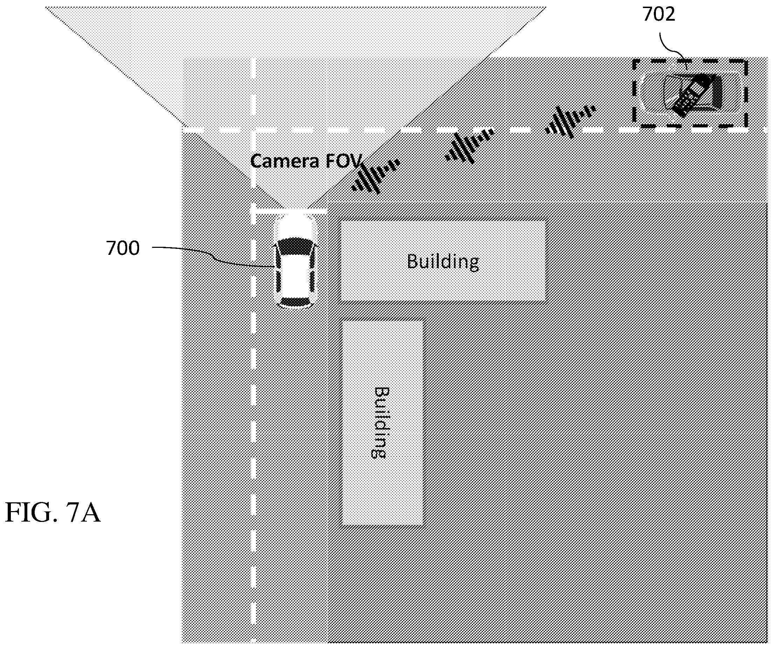

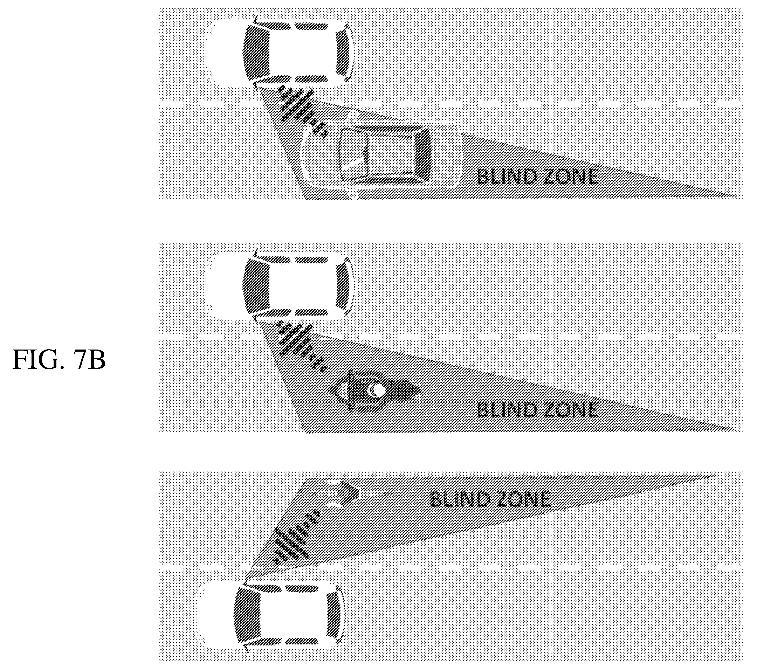

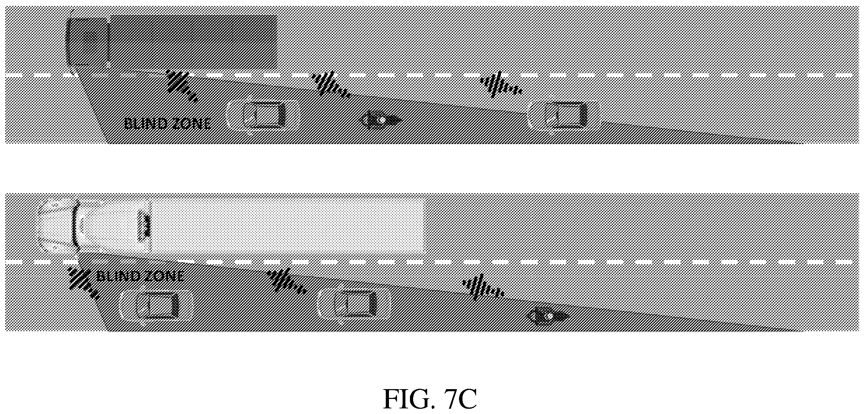

Fig. 7A illustrates an exemplary scene wherein vehicle **700** approaching a junction is unable to detect target vehicle **702** using only visual- or radar-based ADAS detection modalities. Figs. 7B-7C illustrate various additional scenarios where vehicles, motorcycles, and bikes are located in a blind spot and cannot be seen by the driver of a vehicle. In some embodiments, target wireless device detection may provide for detecting and classifying the target based on wireless transmission analysis.

In some embodiments, a target wireless device detection system may be highly advantageous in terms of improving the detection probability of pedestrians, bikes, vehicles, etc. In some embodiments, this probability may increase with the usage of dedicated RF beacon carried by the pedestrian, bike, vehicle, etc. Although such beacon usage may not be common on pedestrians and private bikes and/or vehicles, it can be vastly used on commercial fleets such as rental scooters, bikes and/or vehicles, where an operating company manages policy for a great number of vehicles. Such dedicated RF beacon usage on the fleet vehicles may contribute to lower accident rates, lower insurance fees, etc.

In some embodiments, a target wireless device detection system of the present disclosure may detect hazardous situations by sensing a device carried by a pedestrian, and alerting the pedestrian with respect to the hazardous situation, by sending an alert message to the device. In some embodiments, the system may use an agreed protocol or a defined MAC address, Bluetooth address or SSID which is communicated to the device while conducting data link management and/or a dedicated emergency channel. Alerting the pedestrian/device user might be dependent on pre-installing an application on the device.

In some embodiments, a target wireless device detection system of the present disclosure may collect and store target information, e.g., regarding the number of pedestrian and/or other targets in a specific area and/or time. These data may be collected and stored in a designated database. In some embodiments, such data may comprise data with respect to public transportation systems, e.g., number of passengers in a specific public transportation domain, such as a station, a bus, a train car, a subway car, etc. In some embodiments, a dedicated detection public transportation mounted in public transportation vehicles may be used. In some embodiments such data may include numbers of visitors in a specific public venue or infrastructure, such as building, shopping mall, office, etc.

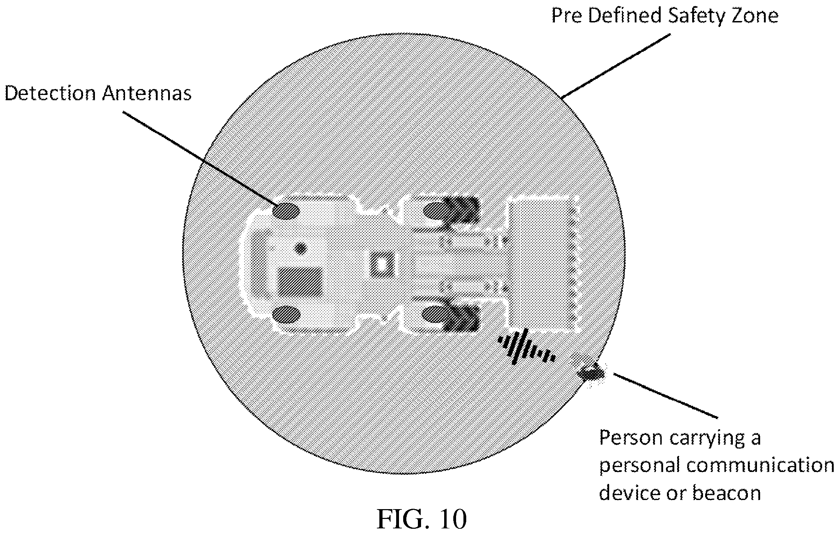

Work sites using heavy mechanical equipment, such as construction sites, mines, etc., involve extensive use of heavy machinery, especially earth moving equipment such as dozers, wheel loaders, tractors, articulated haulers, trucks, etc. Operators of these heavy machines typically suffer from limited visibility. Thus, many hazardous scenarios in such work sites involve personnel located nearby heavy machinery as a part of their daily routine. Heavy worksite machinery thus may be equipped with a target wireless device detection system as described above shown in Fig. 10. The system is detecting entry of a person carrying RF emitting device (personal cellular phone, Bluetooth headset, Wi-Fi, dedicated beacon, smartphone using safety application, etc.) to a pre-defined safety zone. In that case, the system may alert the equipment operator of the presence of a person in the safety area. The system may report to a machine computer in order to stop immediately any automated, autonomous or robotic operation done by the equipment.

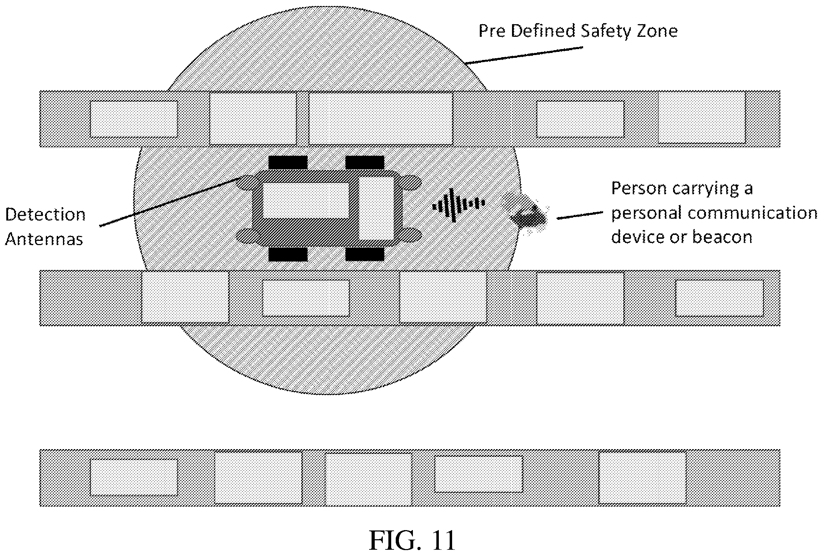

Modern warehouses, manufacturing facilities, and assembly lines make use of robotic equipment like automated goods, parts and materials transportation (autonomous forklifts, freight robots and drones), manufacturing and assembly robots. These highly automated robotic systems are designed to carry high loads and make use of high-powered tools, by that they may cause great danger to personnel sharing the work area. a freight robot equipped with a target wireless device detection system as described above is shown in Fig. 11. The system is detecting entry of a person carrying RF emitting device (personal cellular phone, Bluetooth headset, Wi-Fi, dedicated beacon, smartphone using safety application, etc.) to a safety pre-defined zone. In that case, the robot may activate an alarming signal in order to get personal awareness or stop until the person is out of the safety zone. Another scenario can involve stopping any loading or unloading of the warehouse shelves if any person is around or beneath the automated forklift.

Operating autonomous drones in populated areas is a common task, for example performing commercial deliveries of goods purchased online. The Aviation Regulations in most countries forbids of operating the drone over humans, a system and method for detecting personal communication devices as described above may detect a populated or crowded areas by estimating the amount of personal devices in the area and alert the drone autonomous system or operator of flying or hovering over it in its flight route. By using this information, the drone autonomous system or operator may change its route. The drone may use a dedicated system installed or it might use its own transceiver with a detection method as described above.

Operating autonomous drones may cause safety issues especially when flying near to airports, military bases, and confidential facilities. Although the flying route is pre-planned, navigation faults or malicious cyber-attacks on the drone might cause drifting and flying over the prohibited flying zone. By using a set of signaling beacons that defines the prohibited zone and a communication device detection system mounted on the drone it is possible to prevent the drone from entering the prohibited zone. The beacons mentioned might be portable or it may use signaling application from a personal device, enabling of creating a temporarily prohibited flying zone if needed.

While operating drones in populated areas there might be a need to ensure a safe landing of the drone in a specific point, for example landing it in a site that is shared by personnel like a logistic warehouse. By using a signaling beacon and a communication device detection system mounted on the drone it is possible to define the exact landing spot for the drone. The beacon mentioned might be a bespoke or it may use signaling application from a personal device, enabling of creating an accurate landing spot for the drone if needed.

Detecting the presence of persons in a smart home or building is a required capability, for example at power saving and safety application where counting the amount of people populating the building, tracking the location of a person inside a building, alerting for entrance to a restricted zone, etc.

By implementing a target wireless device detection system in rooms and public areas of a building it is possible to detect and track the presence and number of persons populating it and their whereabouts.

For example, a hotel using the target wireless device detection system can turn off the air-condition and lights (or any other equipment) if no cellular phone is detected in the room.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object-oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described herein with reference to flowchart illustrations and/or region diagrams of methods, apparatus (systems) and computer program products according to embodiments of the invention. It will be understood that each region of the flowchart illustrations and/or region diagrams, and combinations of blocks in the flowchart illustrations and/or block diagrams, can be implemented by computer program instructions. These computer program instructions may be provided to a hardware processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowcharts and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

In the description and claims of the application, each of the words "comprise" "include" and "have", and forms thereof, are not necessarily limited to members in a list with which the words may be associated.

The descriptions of the various embodiments of the present invention have been presented for purposes of illustration, but are not intended to be exhaustive or limited to the embodiments disclosed. The terminology used herein was chosen to best explain the principles of the embodiments, the practical application or technical improvement over technologies found in the marketplace, or to enable others of ordinary skill in the art to understand the embodiments disclosed herein.

**Claims**

**1.** A system for classifying objects for collision detection, comprising:

at least one hardware processor (110); and
a non-transitory computer-readable storage medium (118) having stored thereon program instructions, the program instructions executable by the at least one hardware processor (110) to:

receive a dataset comprising data associated with a plurality of radio frequency (RF) wireless transmissions emitted by a plurality of wireless devices associated with a plurality of objects within a plurality of physical scenes,

at a training stage, train a machine learning model (116) on a training set comprising said dataset and labels indicating a type of each of said objects, and

at an inference stage, apply said trained machine learning model (116) to a target dataset relating to a target object, said trained machine learning model (116) is applied to classify at least one of:

a type of said target object, and
usage of said at least one wireless device by said target object;

and further **characterized in that**:
at least two of:

(i) said dataset comprises, with respect to each of said wireless devices associated with a respective one of said objects, signal parameters comprising physical characteristics of received signals of said associated wireless transmissions; and

said target dataset comprises signal parameters comprising physical characteristics of received signals of wireless transmissions emitted by at least one wireless device associated with said target object;

(ii) said dataset comprises, with respect to each of said wireless devices associated with a respective one of said objects, data included in said associated wireless transmissions, comprising at least one of packet information and source identification of said associated wireless transmissions; and

said target dataset comprises data included in said wireless transmissions emitted by said at least one wireless device, comprising at least one of packet information and source identification of said wireless transmissions;

(iii) said dataset comprises, with respect to each of said wireless devices associated with a respective one of said objects, locational parameters based on wireless transmission patterns of said associated wireless transmissions; and

said target dataset comprises locational parameters based on wireless transmission patterns of said wireless transmissions emitted by said at least one wireless device.

2. The system of claim 1, wherein said plurality of objects are selected from a group consisting of: a pedestrian, a bicycle rider, a scooter rider, a vehicle operator, a vehicle occupant, a vehicle passenger, and a public transportation passenger; and

wherein said plurality of scenes are selected from the group consisting at least of: roadways, highways, public roads, public transportation systems, public venues, work sites, manufacturing facilities, and warehousing facilities.

3. The system of claim 1, wherein said wireless transmissions are transmitted from at least one wireless device associated with each of said objects.

4. The system of Claim 1, wherein said wireless device is selected from a group consisting of: a mobile device, a smartphone, a smart watch, wireless headphones, a tablet, a laptop, a micro-mobility mounted telematics unit, vehicle- mounted telematics unit, vehicle infotainment system, vehicle handsfree system, vehicle tire pressure monitoring system, a drone, a camera, a dashcam, a printer, an access point, and a kitchen appliance.

5. The system of claim 1, wherein said signal parameters of said wireless transmissions are selected from the group consisting of: signal frequency, signal bandwidth, signal strength, signal phase, signal coherence, and signal timing.

6. The system of claim 1, wherein said data included in said wireless transmissions are selected from the group consisting of: data packet parameters, unique device identifier, MAC address, Service Set Identifier (SSID), Basic Service Set Identifier (BSSID), Extended Basic Service Set (ESS), international mobile subscriber identity (IMSI), and temporary IMSI.

7. The system of claim 1, wherein said dataset is labelled with said labels; wherein said labelling optionally comprises:

(i) automatically determining a label for at least one of: object type, and data usage of at least one wireless devices associated with an object, based on at least one data instance within said dataset associated with one of said objects; and

(ii) applying said label as a label to all of said data instances associated with said one of said objects.

8. A method of classifying objects for collision detection, comprising:

receiving a dataset comprising data associated with a plurality of radio frequency (RF) wireless transmissions emitted by a plurality of wireless devices associated with a plurality of objects within a plurality of physical scenes;

at a training stage, train a machine learning model (116) on a training set comprising said dataset and labels indicating a type of each of said objects, and
at an inference stage, apply said trained machine learning model (116) to a target dataset relating to a target object, said trained machine learning model (116) is applied to classify at least one of:

a type of said target object, and
usage of said at least one wireless device by said target object;

and further **characterized in that**:
at least two of:

(i) said dataset comprises, with respect to each of said wireless devices associated with a respective one of said objects, signal parameters comprising physical characteristics of received signals of said associated wireless transmissions; and
said target dataset comprises signal parameters comprising physical characteristics of received signals of wireless transmissions emitted by at least one wireless device associated with said target object;
(ii) said dataset comprises, with respect to each of said wireless devices associated with a respective one of said objects, data included in said associated wireless transmissions, comprising at least one of packet information and source identification of said associated wireless transmissions; and
said target dataset comprises data included in said wireless transmissions emitted by said at least one wireless device, comprising at least one of packet information and source identification of said wireless transmissions;
(iii) said dataset comprises, with respect to each of said wireless devices associated with a respective one of said objects, locational parameters based on wireless transmission patterns of said associated wireless transmissions; and
said target dataset comprises locational parameters based on wireless transmission patterns of said wireless transmissions emitted by said at least one wireless device.

9. The method of claim 8, wherein said plurality of objects are selected from a group consisting of: a pedestrian, a bicycle rider, a scooter rider, a vehicle operator, a vehicle occupant, a vehicle passenger, and a public transportation passenger; and
wherein said plurality of scenes are selected from the group consisting of: roadways, highways, public roads, public transportation systems, public venues, work sites, manufacturing facilities, and warehousing facilities.

10. The method of claim 8, wherein said plurality of scenes are selected from the group consisting of: roadways, highways, public roads, public transportation systems, public venues, work sites, manufacturing facilities, and warehousing facilities.

11. The method of claim 8, wherein said wireless transmissions are transmitted from at least one wireless device associated with each of said objects; wherein at least some of said wireless devices optionally comprise more than one transmitter; and
wherein said wireless device is optionally selected from the group consisting of: a mobile device, a smartphone, a smart watch, wireless headphones, a tablet, a laptop, a micro-mobility mounted telematics unit, vehicle-mounted telematics unit, vehicle infotainment system, vehicle handsfree system, vehicle tire pressure monitoring system, a drone, a camera, a dashcam, a printer, an access point, and a kitchen appliance.

12. The method of claim 8, wherein said signal parameters of said wireless transmissions are selected from the group consisting of: signal frequency, signal bandwidth, signal strength, signal phase, signal coherence, and signal timing.

13. The method of claim 8, wherein said data included in said wireless transmissions are selected from the group consisting of: data packet parameters, unique device identifier, MAC address, Service Set Identifier (SSID), Basic Service Set Identifier (BSSID), Extended Basic Service Set (ESS), international mobile subscriber identity (IMSI), and temporary IMSI.

**14.** The method of claim 8, wherein said dataset is labeled with said labels, wherein said labeling optionally comprises:

(i) automatically determining an object type based on at least one data instance within said dataset associated with one of said objects; and
(ii) applying said object type as a label to all of said data instances associated with said one of said objects.

**15.** A computer program product for classifying objects for collision detection comprising a non-transitory computer-readable storage medium having program instructions embodied therewith, the program instructions executable by at least one hardware processor (110) to:

receive a dataset comprising data associated with a plurality of radio frequency (RF) wireless transmissions emitted by a plurality of wireless devices associated with a plurality of objects within a plurality of physical scenes;

at a training stage, train a machine learning model (116) on a training set comprising said dataset and labels indicating a type of each of said objects, and
at an inference stage, apply said trained machine learning model (116) to a target dataset relating to a target object, said trained machine learning model (116) is applied to classify at least one of:

a type of said target object, and
usage of said at least one wireless device by said target object;

and further **characterized in that**:
at least two of:

(i) said dataset comprises, with respect to each of said wireless devices associated with a respective one of said objects, signal parameters comprising physical characteristics of received signals of said associated wireless transmissions; and
said target dataset comprises signal parameters comprising physical characteristics of received signals of wireless transmissions emitted by at least one wireless device associated with said target object;
(ii) said dataset comprises, with respect to each of said wireless devices associated with a respective one of said objects, data included in said associated wireless transmissions, comprising at least one of packet information and source identification of said associated wireless transmissions; and
said target dataset comprises data included in said wireless transmissions emitted by said at least one wireless device, comprising at least one of packet information and source identification of said wireless transmissions;
(iii) said dataset comprises, with respect to each of said wireless devices associated with a respective one of said objects, locational parameters based on wireless transmission patterns of said associated wireless transmissions; and
said target dataset comprises locational parameters based on wireless transmission patterns of said wireless transmissions emitted by said at least one wireless device;

wherein said plurality of objects are optionally selected from a group consisting of: a pedestrian, a bicycle rider, a scooter rider, a vehicle operator, a vehicle occupant, a vehicle passenger, and a public transportation passenger; and
wherein said plurality of scenes are selected from the group consisting at least of: roadways, highways, public roads, public transportation systems, public venues, work sites, manufacturing facilities, and warehousing facilities.

**Patentansprüche**

**1.** System zum Klassifizieren von Objekten zur Kollisionserfassung, aufweisend:

mindestens einen Hardwareprozessor (110); und
ein nichtflüchtiges, computerlesbares Speichermedium (118), auf dem Programmbefehle gespeichert sind, wobei die Programmbefehle durch den mindestens einen Hardwareprozessor (110) ausführbar sind, um:

einen Datensatz zu empfangen, der Daten aufweist, die einer Vielzahl von Hochfrequenz- (RF) Drahtlosübertragungen zugeordnet sind, die durch eine Vielzahl von drahtlosen Geräten ausgesendet werden, die einer Vielzahl von Objekten innerhalb einer Vielzahl von physikalischen Szenen zugeordnet sind,
in einer Trainingsphase, Trainieren eines maschinellen Lernmodells (116) bezüglich eines Trainingssatzes, der den Datensatz und Etiketten aufweist, die einen Typ jedes der Objekte anzeigen, und
in einer Inferenzphase, Anwenden des trainierten maschinellen Lernmodells (116) auf einen Zieldatensatz, der mit einem Zielobjekt in Beziehung steht, wobei das trainierte maschinelle Lernmodell (116) angewendet wird, um mindestens eines der folgenden Elemente zu klassifizieren:

einen Typ des Zielobjekts; und
die Verwendung des mindestens einen drahtlosen Geräts durch das Zielobjekt; und
ferner **gekennzeichnet durch** mindestens zwei der folgenden Punkte:

(i) der Datensatz weist in Bezug auf jedes der drahtlosen Geräte, die einem jeweiligen der Objekte zugeordnet sind, Signalparameter auf, die physikalische Eigenschaften von empfangenen Signalen der zugeordneten Drahtlosübertragungen aufweisen; und
der Zieldatensatz weist Signalparameter auf, die physikalische Eigenschaften von empfangenen Signalen von Drahtlosübertragungen aufweisen, die von mindestens einem drahtlosen Gerät ausgesendet werden, das dem Zielobjekt zugeordnet ist;
(ii) der Datensatz weist in Bezug auf jedes der drahtlosen Geräte, die einem jeweiligen der Objekte zugeordnet sind, Daten auf, die in den zugeordneten Drahtlosübertragungen enthalten sind und Paketinformation und/oder eine Quellenidentifizierung der zugeordneten Drahtlosübertragungen aufweisen; und
der Zieldatensatz weist Daten auf, die in den Drahtlosübertragungen enthalten sind, die von dem mindestens einen drahtlosen Gerät ausgesendet werden und Paketinformation und/oder eine Quellenidentifizierung der Drahtlosübertragungen aufweisen;
(iii) der Datensatz weist in Bezug auf jedes der drahtlosen Geräte, die einem jeweiligen der Objekte zugeordnet sind, Standortparameter auf, die auf Drahtlosübertragungsmustern der zugehörigen Drahtlosübertragungen basieren; und
der Zieldatensatz weist Standortparameter auf, die auf Drahtlosübertragungsmustern der von dem mindestens einen drahtlosen Gerät ausgesendeten Drahtlosübertragungen basieren.

2. System nach Anspruch 1, wobei die Vielzahl von Objekten ausgewählt sind aus einer Gruppe bestehend aus: einem Fußgänger, einem Fahrradfahrer, einem Rollerfahrer, einem Fahrzeugführer, einem Fahrzeuginsassen, einem Fahrzeugpassagier und einem Passagier eines öffentlichen Verkehrsmittels, wobei die Vielzahl von Szenen ausgewählt sind aus der Gruppe, die mindestens besteht aus: Straßen, Autobahnen, öffentlichen Straßen, öffentlichen Verkehrssystemen, öffentlichen Veranstaltungsorten, Baustellen, Fertigungsanlagen und Warenhäusern.

3. System nach Anspruch 1, wobei die Drahtlosübertragungen von mindestens einem drahtlosen Gerät übertragen werden, das jedem der Objekte zugeordnet ist.

4. System nach Anspruch 1, wobei das drahtlose Gerät ausgewählt ist aus einer Gruppe bestehend aus: einem Mobilgerät, einem Smartphone, einer Smartwatch, drahtlosen Kopfhörern, einem Tablet, einem Laptop, einer an einem Mikromobilitätsgerät montierten Telematikeinheit, einer an einem Fahrzeug montierten Telematikeinheit, einem Fahrzeug-Infotainmentsystem, einer Freisprecheinrichtung für Fahrzeuge, einem Reifendrucküberwachungssystem für Fahrzeuge, einer Drohne, einer Kamera, einer Dashcam, einem Drucker, einem Zugangspunkt und einem Küchengerät.

5. System nach Anspruch 1, wobei die Signalparameter der Drahtlosübertragungen ausgewählt sind aus der Gruppe bestehend aus: Signalfrequenz, Signalbandbreite, Signalstärke, Signalphase, Signalkohärenz und Signaltiming.

6. System nach Anspruch 1, wobei die in den Drahtlosübertragungen enthaltenen Daten ausgewählt sind aus der Gruppe bestehend aus: Datenpaketparametern, einer eindeutigen Gerätekennung, einer MAC-Adresse, einer Service Set Identifier (SSID), einer Basic Service Set Identifier (BSSID), einem Extended Basic Service Set (ESS), einer internationalen Mobilfunkteilnehmerkennung (IMSI) und einer temporären IMSI.

7. System nach Anspruch 1, wobei der Datensatz mit den Etiketten etikettiert ist, wobei das Etikettieren optional aufweist:

(i) automatisches Bestimmen eines Etiketts für einen Objekttyp und/oder Datennutzung mindestens eines drahtlosen Geräts, das einem Objekt zugeordnet ist, basierend auf mindestens einer Dateninstanz innerhalb des Datensatzes, der einem der Objekte zugeordnet ist; und
(ii) Anwenden des Etiketts als Etikett auf alle Dateninstanzen, die dem einem der Objekte zugeordnet sind.

8. Verfahren zum Klassifizieren von Objekten zur Kollisionserfassung, aufweisend:

Empfangen eines Datensatzes, der Daten aufweist, die einer Vielzahl von Hochfrequenz- (RF) Drahtlosübertragungen zugeordnet sind, die durch eine Vielzahl von drahtlosen Geräten ausgesendet werden, die einer Vielzahl von Objekten innerhalb einer Vielzahl von physikalischen Szenen zugeordnet sind;
in einer Trainingsphase, Trainieren eines maschinellen Lernmodells (116) bezüglich eines Trainingssatzes, der den Datensatz und Etiketten aufweist, die einen Typ jedes der Objekte anzeigen, und
in einer Inferenzphase, Anwenden des trainierten maschinellen Lernmodells (116) auf einen Zieldatensatz, der mit einem Zielobjekt in Beziehung steht, wobei das trainierte maschinelle Lernmodell (116) angewendet wird, um mindestens eines der folgenden Elemente zu klassifizieren:

einen Typ des Zielobjekts; und
die Verwendung des mindestens einen drahtlosen Geräts durch das Zielobjekt; und
ferner **gekennzeichnet durch** mindestens zwei der folgenden Punkte:

(i) der Datensatz weist in Bezug auf jedes der drahtlosen Geräte, die einem jeweiligen der Objekte zugeordnet sind, Signalparameter auf, die physikalische Eigenschaften von empfangenen Signalen der zugeordneten Drahtlosübertragungen aufweisen; und
der Zieldatensatz weist Signalparameter auf, die physikalische Eigenschaften von empfangenen Signalen von Drahtlosübertragungen aufweisen, die von mindestens einem drahtlosen Gerät ausgesendet werden, das dem Zielobjekt zugeordnet ist;
(ii) der Datensatz weist in Bezug auf jedes der drahtlosen Geräte, die einem jeweiligen der Objekte zugeordnet sind, Daten auf, die in den zugeordneten Drahtlosübertragungen enthalten sind und Paketinformation und/oder eine Quellenidentifizierung der zugeordneten Drahtlosübertragungen aufweisen; und
der Zieldatensatz weist Daten auf, die in den Drahtlosübertragungen enthalten sind, die von dem mindestens einen drahtlosen Gerät ausgesendet werden und Paketinformation und/oder eine Quellenidentifizierung der Drahtlosübertragungen aufweisen;
(iii) der Datensatz weist in Bezug auf jedes der drahtlosen Geräte, die einem jeweiligen der Objekte zugeordnet sind, Standortparameter auf, die auf Drahtlosübertragungsmustern der zugehörigen Drahtlosübertragungen basieren; und
der Zieldatensatz weist Standortparameter auf, die auf Drahtlosübertragungsmustern der von dem mindestens einen drahtlosen Gerät ausgesendeten Drahtlosübertragungen basieren.

9. Verfahren nach Anspruch 8, wobei:

die Vielzahl von Objekten ausgewählt sind aus einer Gruppe bestehend aus: einem Fußgänger, einem Fahrradfahrer, einem Rollerfahrer, einem Fahrzeugführer, einem Fahrzeuginsassen, einem Fahrzeugpassagier und einem Passagier eines öffentlichen Verkehrsmittels, und
wobei die Vielzahl von Szenen ausgewählt sind aus der Gruppe, die mindestens besteht aus: Straßen, Autobahnen, öffentlichen Straßen, öffentlichen Verkehrssystemen, öffentlichen Veranstaltungsorten, Baustellen, Fertigungsanlagen und Warenhäusern.

10. Verfahren nach Anspruch 8, wobei die Vielzahl von Szenen ausgewählt sind aus der Gruppe bestehend aus Straßen, Autobahnen, öffentlichen Straßen, öffentlichen Verkehrssystemen, öffentlichen Veranstaltungsorten, Baustellen, Fertigungsanlagen und Lagerhäusern.

11. Verfahren nach Anspruch 8, wobei die Drahtlosübertragungen von mindestens einem drahtlosen Gerät übertragen werden, das jedem der Objekte zugeordnet ist, wobei mindestens einige der drahtlosen Geräte optional mehr als einen Sender aufweisen, und

wobei das drahtlose Gerät optional ausgewählt ist aus der Gruppe bestehend aus einem Mobilgerät, einem Smartphone, einer Smartwatch, drahtlosen Kopfhörern, einem Tablet, einem Laptop, einer an einem Mikromobilitätsgerät montierten Telematikeinheit, einer in einem Fahrzeug montierten Telematikeinheit, einem Fahrzeug-Infotainmentsystem, einer Freisprecheinrichtung für Fahrzeuge, einem Reifendrucküberwachungssystem für Fahrzeuge, einer Drohne, einer Kamera, einer Dashcam, einem Drucker, einem Zugangspunkt und einem Küchengerät.

12. Verfahren nach Anspruch 8, wobei die Signalparameter der Drahtlosübertragungen ausgewählt sind aus der Gruppe bestehend aus Signalfrequenz, Signalbandbreite, Signalstärke, Signalphase, Signalkohärenz und Signaltiming.

13. Verfahren nach Anspruch 8, wobei die in den Drahtlosübertragungen enthaltenen Daten ausgewählt sind aus der Gruppe bestehend aus Datenpaketparametern, einer eindeutigen Gerätekennung, einer MAC-Adresse, einer Service Set Identifier (SSID), einer Basic Service Set Identifier (BSSID), einem Extended Basic Service Set (ESS), einer internationalen Mobilteilnehmerkennung (IMSI) und einer temporären IMSI.

14. Verfahren nach Anspruch 8, wobei der Datensatz mit den Etiketten etikettiert wird, wobei das Etikettieren optional aufweist:

(i) automatisches Bestimmen eines Objekttyps auf der Grundlage mindestens einer Dateninstanz innerhalb des Datensatzes, der einem der Objekte zugeordnet ist; und

(ii) Anwenden des Objekttyps als Etikett auf alle Dateninstanzen, die dem einen der Objekte zugeordnet sind.

15. Computerprogrammprodukt zum Klassifizieren von Objekten für eine Kollisionserfassung, das ein nichtflüchtiges, computerlesbares Speichermedium mit darauf gespeicherten Programmbefehlen aufweist, wobei die Programmbefehle durch mindestens einen Hardwareprozessor (110) ausgeführt werden können, um:

einen Datensatz zu empfangen, der Daten aufweist, die einer Vielzahl von Hochfrequenz- (RF) Drahtlosübertragungen zugeordnet sind, die durch eine Vielzahl von drahtlosen Geräten ausgesendet werden, die einer Vielzahl von Objekten innerhalb einer Vielzahl von physikalischen Szenen zugeordnet sind,

in einer Trainingsphase, Trainieren eines maschinellen Lernmodells (116) bezüglich eines Trainingssatzes, der den Datensatz und Etiketten aufweist, die einen Typ jedes der Objekte anzeigen, und

in einer Inferenzphase, Anwenden des trainierten maschinellen Lernmodells (116) auf einen Zieldatensatz, der mit einem Zielobjekt in Beziehung steht, wobei das trainierte maschinelle Lernmodell (116) angewendet wird, um mindestens eines der folgenden Elemente zu klassifizieren:

einen Typ des Zielobjekts; und

die Verwendung des mindestens einen drahtlosen Geräts durch das Zielobjekt; und

ferner **gekennzeichnet durch** mindestens zwei der folgenden Punkte:

(i) der Datensatz weist in Bezug auf jedes der drahtlosen Geräte, die einem jeweiligen der Objekte zugeordnet sind, Signalparameter auf, die physikalische Eigenschaften von empfangenen Signalen der zugeordneten Drahtlosübertragungen aufweisen; und

der Zieldatensatz weist Signalparameter auf, die physikalische Eigenschaften von empfangenen Signalen von Drahtlosübertragungen aufweisen, die von mindestens einem drahtlosen Gerät ausgesendet werden, das dem Zielobjekt zugeordnet ist;

(ii) der Datensatz weist in Bezug auf jedes der drahtlosen Geräte, die einem jeweiligen der Objekte zugeordnet sind, Daten auf, die in den zugeordneten Drahtlosübertragungen enthalten sind und Paketinformation und/oder eine Quellenidentifizierung der zugeordneten Drahtlosübertragungen aufweisen; und

der Zieldatensatz weist Daten auf, die in den Drahtlosübertragungen enthalten sind, die von dem mindestens einen drahtlosen Gerät ausgesendet werden und Paketinformation und/oder eine Quellenidentifizierung der Drahtlosübertragungen aufweisen;

(iii) der Datensatz weist in Bezug auf jedes der drahtlosen Geräte, die einem jeweiligen der Objekte zugeordnet sind, Standortparameter auf, die auf Drahtlosübertragungsmustern der zugehörigen Drahtlosübertragungen basieren; und

der Zieldatensatz weist Standortparameter auf, die auf Drahtlosübertragungsmustern der von dem mindestens einen drahtlosen Gerät ausgesendeten Drahtlosübertragungen basieren,

wobei die Vielzahl von Objekten optional ausgewählt sind aus einer Gruppe bestehend aus einem Fußgänger, einem Fahrradfahrer, einem Rollerfahrer, einem Fahrzeugführer, einem Fahrzeuginsassen, einem Fahrzeugpassagier und einem Passagier eines öffentlichen Verkehrsmittels, und
wobei die Vielzahl von Szenen ausgewählt sind aus der Gruppe bestehend aus Straßen, Autobahnen, öffentlichen Straßen, öffentlichen Verkehrssystemen, öffentlichen Veranstaltungsorten, Baustellen, Fertigungsanlagen und Warenhäusern.

**Revendications**

1. Système de classification d'objets pour la détection de collisions, comprenant :

au moins un processeur matériel (110) ; et
un support d'enregistrement informatique non transitoire lisible par ordinateur (118) contenant des instructions de programme, les instructions de programme étant exécutables par l'au moins un processeur matériel (110) pour :

recevoir un ensemble de données comprenant des données associées à une pluralité de transmissions sans fil par radiofréquence (RF) émises par une pluralité de dispositifs sans fil associés à une pluralité d'objets dans une pluralité de scènes physiques,
à un stade de formation, former un modèle d'apprentissage automatique (116) sur un ensemble d'entraînement comprenant ledit ensemble de données et des étiquettes indiquant un type de chacun desdits objets, et
à un stade d'inférence, appliquer ledit modèle d'apprentissage automatique entraîné (116) à un ensemble de données cible relatif à un objet cible, ledit modèle d'apprentissage automatique entraîné (116) étant appliqué pour classer au moins l'un de :

un type dudit objet cible, et
une utilisation dudit au moins un dispositif sans fil par ledit objet cible ; et

en outre **caractérisé en ce que** :
au moins deux de :

(i) ledit ensemble de données comprend, à l'égard de chacun desdits dispositifs sans fil associés à un desdits objets, des paramètres de signal comprenant des caractéristiques physiques des signaux reçus desdites transmissions sans fil associées ; et
ledit ensemble de données cible comprend des paramètres de signal comprenant des caractéristiques physiques des signaux reçus des transmissions sans fil émises par au moins un dispositif sans fil associé audit objet cible ;
(ii) ledit ensemble de données comprend, à l'égard de chacun desdits dispositifs sans fil associés à un objet respectif desdits objets, des données incluses dans lesdites transmissions sans fil associées, comprenant au moins l'une des informations de paquet et de l'identification de source desdites transmissions sans fil associées; et ledit ensemble de données cible comprend des données incluses dans lesdites transmissions sans fil émises par ledit au moins un dispositif sans fil, comprenant au moins l'une des informations de paquet et de l'identification de source desdites transmissions sans fil ;
(iii) ledit ensemble de données comprend, à l'égard de chacun desdits dispositifs sans fil associés à un objet respectif desdits objets, des paramètres de localisation basés sur des motifs de transmission sans fil desdites transmissions sans fil associées ; et
ledit ensemble de données cible comprend des paramètres de localisation basés sur des motifs de transmission sans fil desdites transmissions sans fil émises par ledit au moins un dispositif sans fil.

2. Système selon la revendication 1, dans lequel ladite pluralité d'objets est sélectionnée dans un groupe consistant en : un piéton, un cycliste, un conducteur de trottinette, un conducteur de véhicule, un occupant de véhicule, un passager de véhicule et un passager des transports publics ; et dans lequel ladite pluralité de scènes est sélectionnée dans le groupe constitué au moins de : routes, autoroutes, routes publiques, systèmes de transport public, lieux publics, chantiers, établissements de fabrication et établissements de stockage.

3. Système selon la revendication 1, dans lequel lesdites transmissions sans fil sont transmises à partir d'au moins un dispositif sans fil associé à chacun desdits objets.

**4.** Système selon la revendication 1, dans lequel ledit dispositif sans fil est sélectionné dans un groupe constitué de : un dispositif mobile, un smartphone, une montre intelligente, des écouteurs sans fil, une tablette, un ordinateur portable, une unité de télématique montée sur micromobilité, une unité de télématique montée sur véhicule, un système d'info-divertissement embarqué, un système mains libres embarqué, un système de surveillance de la pression des pneus de véhicule, un drone, un appareil photo, une caméra de tableau de bord, une imprimante, un point d'accès et un appareil de cuisine.

**5.** Système selon la revendication 1, dans lequel lesdits paramètres de signal desdites transmissions sans fil sont sélectionnés dans le groupe constitué de: fréquence du signal, bande passante du signal, force du signal, phase du signal, cohérence du signal et synchronisation du signal.

**6.** Système selon la revendication 1, dans lequel lesdites données incluses dans lesdites transmissions sans fil sont sélectionnées dans le groupe constitué de : paramètres de paquet de données, identifiant de dispositif unique, adresse MAC, identifiant de l'ensemble de services (SSID), identifiant de l'ensemble de services de base (BSSID), ensemble de services de base étendu (ESS), identité internationale d'abonné mobile (IMSI), et IMSI temporaire.

**7.** Système de la revendication 1, dans lequel ledit ensemble de données est étiqueté avec lesdites étiquettes ; dans lequel ledit étiquetage comprend optionnellement :

(i) la détermination automatique d'une étiquette pour au moins un des éléments suivants : type d'objet, et utilisation de données d'au moins un dispositif sans fil associé à un objet, sur la base d'au moins une instance de données dans ledit ensemble de données associé à l'un desdits objets ; et
(ii) l'application de ladite étiquette comme étiquette à toutes lesdites instances de données associées audit un desdits objets.

**8.** Procédé de classification d'objets pour la détection de collisions, comprenant :

la réception d'un ensemble de données comprenant des données associées à une pluralité de transmissions sans fil (RF) par radiofréquence émises par une pluralité de dispositifs sans fil associés à une pluralité d'objets dans une pluralité de scènes physiques ;

à une étape d'entraînement, l'entraînement d'un modèle d'apprentissage automatique (116) sur un ensemble d'entraînement comprenant ledit ensemble de données et des étiquettes indiquant un type de chacun desdits objets, et
à une étape d'inférence, l'application dudit modèle d'apprentissage automatique entraîné (116) à un ensemble de données cible relatif à un objet cible, ledit modèle d'apprentissage automatique entraîné (116) étant appliqué pour classer au moins l'un des éléments suivants :

un type dudit objet cible, et
une utilisation dudit au moins un dispositif sans fil par ledit objet cible;

et en outre **caractérisé en ce que** :
au moins deux des éléments suivants :

(i) ledit ensemble de données comprend, à l'égard de chacun desdits dispositifs sans fil associés à un objet respectif desdits objets, des paramètres de signal comprenant des caractéristiques physiques des signaux reçus desdites transmissions sans fil associées ; et
ledit ensemble de données cible comprend des paramètres de signal comprenant des caractéristiques physiques des signaux reçus des transmissions sans fil émises par au moins un dispositif sans fil associé audit objet cible ;
(ii) ledit ensemble de données comprend, à l'égard de chacun desdits dispositifs sans fil associés à un objet respectif desdits objets, des données incluses dans lesdites transmissions sans fil associées, comprenant au moins l'une des informations de paquet et de l'identification de source desdites transmissions sans fil associées ; et
ledit ensemble de données cible comprend des données incluses dans lesdites transmissions sans fil émises par ledit au moins un dispositif sans fil, comprenant au moins l'une des informations de paquet et de l'identification de source desdites transmissions sans fil ;
(iii) ledit ensemble de données comprend, à l'égard de chacun desdits dispositifs sans fil associés à un objet respectif desdits objets, des paramètres de localisation basés sur des motifs de transmission sans fil desdites transmissions sans fil associées ; et

ledit ensemble de données cible comprend des paramètres de localisation basés sur des motifs de transmission sans fil desdites transmissions sans fil émises par ledit au moins un dispositif sans fil.

**9.** Procédé selon la revendication 8, dans lequel ladite pluralité d'objets est sélectionnée dans un groupe constitué de : un piéton, un cycliste, un conducteur de trottinette, un conducteur de véhicule, un occupant de véhicule, un passager de véhicule et un passager des transports publics ; et dans lequel ladite pluralité de scènes est sélectionnée dans le groupe constitué de : routes, autoroutes, routes publiques, systèmes de transport public, lieux publics, chantiers, établissements de fabrication et établissements de stockage.

**10.** Procédé selon la revendication 8, dans lequel ladite pluralité de scènes est sélectionnée dans le groupe constitué de : routes, autoroutes, routes publiques, systèmes de transport public, lieux publics, chantiers, établissements de fabrication et établissements de stockage.

**11.** Procédé selon la revendication 8, dans lequel lesdites transmissions sans fil sont transmises depuis au moins un dispositif sans fil associé à chacun desdits objets ; dans lequel au moins certains desdits dispositifs sans fil comprennent optionnellement plus d'un émetteur ; et dans lequel ledit dispositif sans fil est optionnellement sélectionné dans un groupe constitué de : un dispositif mobile, un smartphone, une montre intelligente, des écouteurs sans fil, une tablette, un ordinateur portable, une unité de télématique montée sur micromobilité, une unité de télématique montée sur véhicule, un système d'info-divertissement embarqué, un système mains libres embarqué, un système de surveillance de la pression des pneus de véhicule, un drone, un appareil photo, une caméra de tableau de bord, une imprimante, un point d'accès et un appareil de cuisine.

**12.** Procédé selon la revendication 8, dans lequel les paramètres de signal desdites transmissions sans fil sont sélectionnés dans le groupe constitué de : fréquence du signal, bande passante du signal, force du signal, phase du signal, cohérence du signal et synchronisation du signal.

**13.** Procédé selon la revendication 8, dans lequel les données incluses dans lesdites transmissions sans fil sont sélectionnées dans le groupe constitué de : paramètres de paquet de données, identifiant de dispositif unique, adresse MAC, identifiant de l'ensemble de services (SSID), identifiant de l'ensemble de services de base (BSSID), ensemble de services de base étendu (ESS), identité internationale d'abonné mobile (IMSI), et IMSI temporaire.

**14.** Procédé selon la revendication 8, dans lequel ledit ensemble de données est étiqueté avec lesdites étiquettes, l'étiquetage comprenant optionnellement :

(i) la détermination automatique d'un type d'objet sur la base d'au moins une instance de données dans ledit ensemble de données associé à l'un desdits objets ; et

(ii) l'application dudit type d'objet comme étiquette à toutes les instances de données associées audit un desdits objets.

**15.** Produit programme d'ordinateur pour classer des objets pour la détection de collisions comprenant un support d'enregistrement informatique non transitoire lisible par ordinateur ayant des instructions de programme intégrées, les instructions de programme étant exécutables par au moins un processeur matériel (110) pour :

recevoir un ensemble de données comprenant des données associées à une pluralité de transmissions sans fil de radiofréquence (RF) émises par une pluralité de dispositifs sans fil associés à une pluralité d'objets dans une pluralité de scènes physiques ;

à un stade d'entraînement, entraîner un modèle d'apprentissage automatique (116) sur un ensemble d'entraînement comprenant ledit ensemble de données et des étiquettes indiquant un type de chacun desdits objets, et

à un stade d'inférence, appliquer ledit modèle d'apprentissage automatique entraîné (116) à un ensemble de données cible relatif à un objet cible, ledit modèle d'apprentissage automatique entraîné (116) étant appliqué pour classifier au moins l'un de :

un type dudit objet cible, et

une utilisation dudit au moins un dispositif sans fil par ledit objet cible ;

et en outre **caractérisé en ce que** :
au moins deux des éléments suivants :

(i) ledit ensemble de données comprend, à l'égard de chacun desdits dispositifs sans fil associés à un objet respectif desdits objets, des paramètres de signal comprenant des caractéristiques physiques des signaux reçus desdites transmissions sans fil associées ; et
ledit ensemble de données cible comprend des paramètres de signal comprenant des caractéristiques physiques des signaux reçus des transmissions sans fil émises par au moins un dispositif sans fil associé audit objet cible ;
(ii) ledit ensemble de données comprend, à l'égard de chacun desdits dispositifs sans fil associés à un objet respectif desdits objets, des données incluses dans lesdites transmissions sans fil associées, comprenant au moins l'une d'informations de paquet et de l'identification de source desdites transmissions sans fil associées ; et
ledit ensemble de données cible comprend des données incluses dans lesdites transmissions sans fil émises par ledit au moins un dispositif sans fil, comprenant au moins l'une d'informations de paquet et de l'identification de source desdites transmissions sans fil ;
(iii) ledit ensemble de données comprend, à l'égard de chacun desdits dispositifs sans fil associés à un objet respectif desdits objets, des paramètres de localisation basés sur des motifs de transmission sans fil desdites transmissions sans fil associées ; et
ledit ensemble de données cible comprend des paramètres de localisation basés sur des motifs de transmission sans fil desdites transmissions sans fil émises par ledit au moins un dispositif sans fil,

dans lequel ladite pluralité d'objets est optionnellement sélectionnée dans un groupe constitué de : un piéton, un cycliste, un conducteur de trottinette, un conducteur de véhicule, un occupant de véhicule, un passager de véhicule et un passager des transports publics ; et dans lequel ladite pluralité de scènes est sélectionnée dans le groupe au moins constitué de : routes, autoroutes, routes publiques, systèmes de transport public, lieux publics, chantiers, établissements de fabrication et établissements de stockage.

FIG. 1

FIG. 2

Antenna    Antenna

| | |
|---|---|
| BPF | BPF |
| LNA | LNA |

SDR – Software Defined Radio

Mixer

RX | LPF | ADC

Signal processing

| | |
|---|---|
| LNA | LNA |
| BPF | BPF |

LO | Synthesizer

Antenna    Antenna

FIG. 3A

EP 3 980 982 B1

RF SENSOR
MODULE 112

SIGNAL PROCESSING
MODULE 116

RF detection

Direction
Finding

Wi-Fi data link and
network
detector

Range
Measurement

Bluetooth data
link and network
detector

Device
Classification
&
Identification

FIG. 3B

EP 3 980 982 B1

FIG. 4A

Wi-Fi device detected

No ← Similar Bluetooth address found? → Yes

Evaluate Bluetooth address by MAC address

address Bluetooth device

No

Bluetooth device appeared

Yes

address device by MAC address

FIG. 4B

Acquire device parameters, identify and classify

FIG. 5

```
                              ┌─────────────────┐
                              │  ADAS Camera    │
                              │   Pedestrian    │
                              │   Detection     │
                              └─────────────────┘
                                      │
                                   ╱──┴──╲
                      No        ╱  Highly  ╲
                ┌──────────────╱   Ranked   ╲──────────┐
                │              ╲  Detection  ╱          │
                │               ╲     ?     ╱           │
                │                ╲─────────╱            │
              ╱──┴──╲               Yes                 │
      No    ╱ Detected╲                                 │
    ┌──────╱    By     ╲─────────┐                      │
    │      ╲  RADAR?   ╱   Yes   │                      │
    │       ╲─────────╱          │                      │
    │                            │                      │
  ╱──┴──╲                        │                      │
 ╱RF emitter╲                    │                      │
 ╲Detected in╱  Yes              │                      │ Yes
  ╲The Estimated╱────┐           │                      │
   ╲Location?╱       │           │                      │
     No              │           │                      │
 ┌──────────┐   ┌──────────┐
 │ Neglect  │   │  Alert   │
 │  Object  │   │  Driver  │
 └──────────┘   └──────────┘
```

FIG. 6

FIG. 7A

FIG. 7B

FIG. 7C

FIG. 8

FIG. 9

Detection Antennas

Pre Defined Safety Zone

Person carrying a personal communication device or beacon

FIG. 10

EP 3 980 982 B1

Pre Defined Safety Zone

Person carrying a personal communication device or beacon

Detection Antennas

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62858364

- GB 2562706 A